(19) Europäisches Patentamt
European Patent Office
Office européen des brevets

(11) **EP 4 645 110 A1**

(12) **EUROPEAN PATENT APPLICATION**

(43) Date of publication:
**05.11.2025 Bulletin 2025/45**

(21) Application number: **25167808.2**

(22) Date of filing: **01.04.2025**

(51) International Patent Classification (IPC):
*G06F 16/334* (2025.01)    *G06N 20/00* (2019.01)

(52) Cooperative Patent Classification (CPC):
**G06F 16/3347; G06N 3/08; G06N 5/01; G06N 7/01; G06N 20/00; G06N 20/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.05.2024 US 202463642298 P**
**30.08.2024 US 202418821201**

(71) Applicant: **Intel Corporation**
**Santa Clara, CA 95054 (US)**

(72) Inventors:
• **WILLKE, Theodore**
**Portland, 97232 (US)**
• **BHATI, Ishwar Singh**
**Portland, 97229 (US)**
• **TEPPER, Mariano**
**Portland, 97229 (US)**
• **HILDEBRAND, Mark**
**Damascus, 97089 (US)**
• **AGUERREBERE OTEGUI, Maria Cecilia**
**Sunnyvale, 94087 (US)**

(74) Representative: **Maiwald GmbH**
**Engineering**
**Elisenhof**
**Elisenstrasse 3**
**80335 München (DE)**

(54) **DIMENSIONALITY REDUCTION TECHNOLOGY TO ACCELERATE HIGH-DIMENSIONAL VECTOR SEARCHES AND INDEX CONSTRUCTION**

(57) Technology as described herein provides for accessing input vectors and a query vector, the input vectors each having a dimensionality, the query vector associated with a query and having a dimensionality, applying a first vector transformation to the input vectors to generate primary vectors, each of the primary vectors having a dimensionality smaller than the dimensionality associated with the input vectors, applying a second vector transformation to the query vector to generate a modified query vector, the modified query vector having a dimensionality smaller than the dimensionality of the query vector, and conducting a similarity search on the primary vectors based on the modified query vector to generate one or more candidates for the query. **In** embodiments a first component of the first vector transformation is determined based on an algorithm and a second component of the second vector transformation is determined based on the same algorithm.

FIG. 1

**Description**

## CROSS-REFERENCE TO RELATED APPLICATIONS

The present application claims the benefit of priority to U.S. Provisional Patent Application No. 63/642,298, filed on May 3, 2024.

## BACKGROUND

In the deep learning era, high-dimensional vectors have become the quintessential data representation for unstructured data, e.g., for images, audio, video, text, genomics, computer code, etc. These representations are built such that semantically related items become vectors that are close to each other according to a chosen similarity function. Similarity searching is the process of retrieving items that are similar to a given query. When properly implemented, similarity searching is mainly bottlenecked by the memory bandwidth of the system.

## BRIEF DESCRIPTION OF THE DRAWINGS

The various advantages of the embodiments will become apparent to one skilled in the art by reading the following specification and appended claims, and by referencing the following drawings, in which:

FIG. 1 is an illustration of an example of a retrieval augmented generation (RAG) workflow according to one or more embodiments;
FIGs. 2A-2D illustrate example alternative LeanVec frameworks that use dimensionality reduction techniques to accelerate similarity searching according to one or more embodiments;
FIG. 3 provides a diagram illustrating an example algorithm, based on a Frank-Wolfe procedure, for determining components of vector transformations according to one or more embodiments;
FIG. 4 provides a diagram illustrating an example algorithm, based on an eigenvector search, for determining components of vector transformations according to one or more embodiments;
FIG. 5 provides a diagram illustrating an example algorithm, based on closed-form singular value decomposition, for determining components of vector transformations according to one or more embodiments;
FIGs. 6A-6B provide flow diagrams illustrating an example method of conducting a similarity search according to one or more embodiments;
FIG. 7 provides a block diagram illustrating an example performance-enhanced computing system according to one or more embodiments;
FIG. 8 provides a block diagram illustrating an example semiconductor apparatus according to one or more embodiments;
FIG. 9 is a block diagram illustrating an example processor core according to one or more embodiments; and
FIG. 10 is a block diagram illustrating an example of a multi-processor based computing system according to one or more embodiments.

## DETAILED DESCRIPTION

Retrieval augmented generation (RAG) is an artificial intelligence (AI) model retraining alternative that can create a domain-specific large language model (LLM) by augmenting open-source pre-trained models with both proprietary and open data. Accordingly, RAG develops business-specific results, while keeping proprietary data safe and secure (e.g., without sharing the data with third-party large foundation models). Indeed, RAG can be deployed in a wide range of industries such as, for example, consumer goods and retails, healthcare and medicine, manufacturing, media and entertainment, financial services, and so forth.

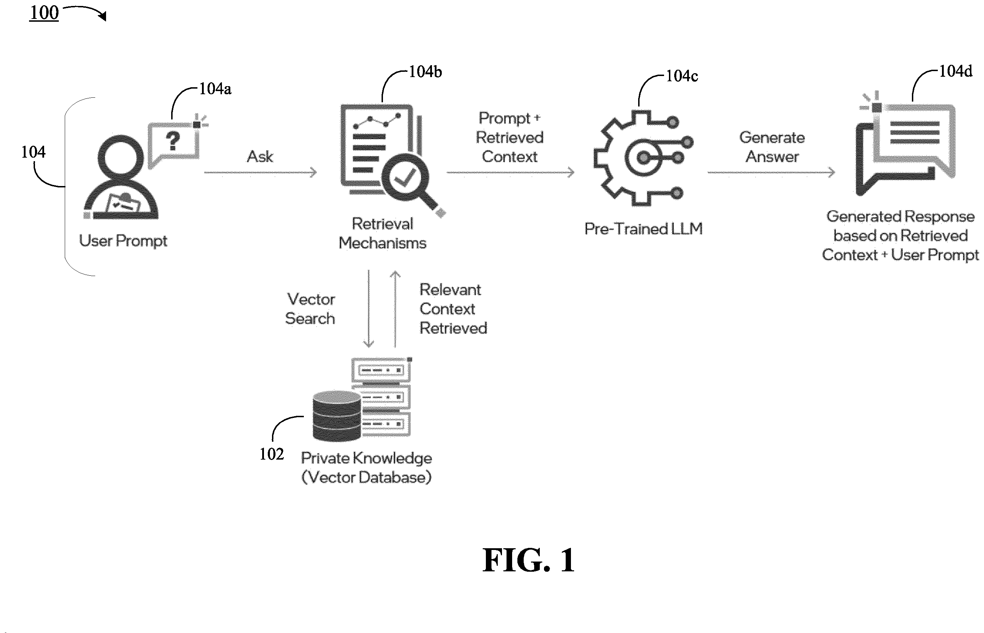

FIG. 1 shows an example of a RAG workflow 100 in which private knowledge stored in a database 102 (e.g., a custom-built knowledge base stored in a vector database) is added into a prompt stream 104 (104a-104d) of an AI model as dynamic, query-dependent data. In the illustrated example, a first stage 104a of the prompt stream 104 conducts user query processing, a second stage 104b of the prompt stream 104 retrieves relevant contextual data (e.g., "context") from the private knowledge 102, a third stage 104c incorporates the relevant data into the input of a pre-trained LLM (e.g., source model), and a fourth stage 104d outputs a generated response based on the retrieved context and the user prompt. The prompt and the retrieved context enrich the output of the pre-trained LLM, delivering more relevant and accurate results.

More particularly, the second stage 104b of the prompt stream 104 converts the user prompt into a vector embedding and uses vector searching to find similar content in the vector database of the private knowledge 102 (e.g.,

calculating the distance between the vectorized user prompt and the data retrieved from the vector database). The vector database can be pre-constructed from PDF (portable document format) files, logs, transcripts, and so forth. The most relevant data is retrieved, incorporated with the user prompt, and passed to the pre-trained model of the third stage 104c for inference service and final output generation. This context incorporation provides models with additional information unavailable during pretraining, better aligning the models with the task or domain of interest of the user. Because RAG may not require retraining or fine-tuning the model, RAG can be an efficient way to add the data of an organization to provide context to an LLM.

While the example RAG workflow 100 illustrates use with a pre-trained LLM, in embodiments the RAG workflow 100 is implemented with use of one or more of a variety of pre-trained model types, such as a pre-trained machine learning (ML) model, a pre-trained neural network model, etc.

In embodiments, computing systems implementing RAG can use the contextual data in variety of RAG settings. For example, in consumer goods and retail applications, RAG technology can be deployed in virtual fitting rooms, delivery and installation environments, in-store product-finding assistance environments, demand prediction and inventory planning environments, novel product design environments, etc., to augment pre-trained models with proprietary data. In healthcare and medicine applications, RAG technology can be used to assist busy front-line staff, transcribe and summarize medical notes, answer medical questions as a chatbot, inform diagnosis and treatments via predictive analytics, etc., with organization-specific context data. In manufacturing environments, RAG technology can be deployed as an expert copilot for technicians, in conversational interactions with machines, in prescriptive and proactive field service, in natural language troubleshooting, in warranty status and documentation, in recovery strategy solutions (e.g., understanding process bottlenecks), and so forth.

In media and entertainment applications, RAG technology can be used to perform intelligent search and tailored content delivery, headline and copy development, provide real-time feedback on content quality, personalize playlists, news digests and recommendations, conduct interactive storytelling via viewer choices, make targeted offers and/or subscription plans, monitor network traffic to detect copyright infringement, etc. In financial services applications, RAG technology can be used to uncover trading signals, alert traders to vulnerable positions, accelerate underwriting decisions, optimize and rebuild legacy systems, reverse-engineer banking and insurance models, monitor for potential financial crimes and fraud, automate data gathering for regulatory compliance, extract insights from corporate disclosures, etc.

As will be discussed in greater detail, the technology described herein provides a framework that uses dimensionality reduction techniques to accelerate similarity searching for high-dimensional vector applications. Embodiments combine dimensionality reduction and quantization techniques to further improve similarity search performance with no degradation in quality, making it suitable for applications with deep learning embedding vectors. By providing accurate and high-performance similarity searching for large-scale vector databases, the technology thus enables applications to accelerate modern deep learning applications requiring high-dimensional embedding vectors with multi-modality.

With increasing dimensionality of the embedding vectors in modern deep learning models, existing vector quantization schemes are not sufficient to alleviate the memory bandwidth and computation overheads, leading to subpar search performance. Previous attempts to apply dimensionality reduction to improve the performance of similarity searching lack systematic studies of its effects when applied to deep learning embedding vectors in state-of-the-art graph-based indices. Dimensionality reduction is deeply related to metric learning. In the case when the database and query distribution are the same, any metric learned for the main dataset will be equally suitable for similarity searching. Such a learned metric may, however, be unsuitable for similarity searching when the database and query distributions are different.

As an instance of deep metric learning, one approach is CCST (connecting compression spaces with transformers), which uses transformers to reduce the dimensionality of deep learning embedding vectors. The computational complexity of transformers, however, precludes their usage for search and circumscribes their application to index construction, where they lead to significant performance gains. Furthermore, while other approaches use principal components analysis (PCA) in the context of retrieval-augmented language models (LM), they treat the similarity searching system as a black box and do not address out-of-distribution (OOD) aspects.

## Introduction

Similarity searching - the process of retrieving the most relevant vectors to a given query vector form a large collection of vectors - is at the core of countless real-world workloads (e.g., recommender systems, advertisement/ad matching, etc.). As already noted, a prominent example is RAG, which extends the capabilities of generative AI with more factually accurate, up-to-date, and verifiable results. High-dimensional embedding vectors stemming from deep learning models have become the quintessential data representation for unstructured data, e.g., for images, audio, video, text, genomics, computer code, etc. The power of such data representations comes from translating semantic affinities into spatial similarities between the corresponding vectors. Thus, searching over massive collections of vectors for the nearest neighbors to a given query vector yields semantically relevant results, enabling a wide range of applications.

Among other similarity searching approaches, graph-based methods exhibit high accuracy and performance for high-dimensional data. In such solutions, the index consists of a directed graph, where each vertex corresponds to a dataset vector, and edges represent neighbor relationships between vectors so that the graph can be efficiently traversed to find the nearest neighbors in sub-linear time. Recent work, however, has shown that, when properly implemented, graph searching is bottlenecked by the memory bandwidth of the system, which is mainly consumed by fetching database vectors from memory in a random access pattern.

Recently, Locally-adaptive Vector Quantization (LVQ) has been introduced. A lightweight method, LVQ uses simple and efficient compression technology to compress values in each of the vectors, which results in reduced memory pressure, and a built-in two-level quantization remainder system that avoids maintaining full precision vectors. After centering the data, LVQ scales each vector individually (e.g., the local adaptation) and then performs uniform scalar quantization. The per-vector compression of LVQ introduces a negligible accuracy degradation due to an effective usage of all quantization levels. When appropriate, a second-level quantization remainder is used to conduct a final re-ranking to further boost search recall. LVQ is described in C. Aguerrebere el el., "Similarity Search in the Blink of an Eye with Compressed Indices," Proceedings of the VLDB Endowment 16, 11 (2023), 3433-3446, which is incorporated by reference herein in its entirety.

**Poor scaling as vector dimensionality grows**

In some applications, LVQ can be employed to significantly accelerate searching, leading to improved performance. Yet, although LVQ removes the memory bottleneck in vectors of moderate dimensionality ($D \approx 128$), when used alone this technique exhibits increased memory bandwidth and computational pressure for higher dimensional (e.g., $D = 512, 768$) deep learning embedding vectors. Higher memory utilization drastically increases the memory latency to access each vector, which results in suboptimal search performance. Even masterful placement of prefetching instructions in the software cannot mitigate the increased latency with high-dimensional vectors. Such difficulties extend to the time-consuming procedure of constructing a graph-based index, as construction speed is proportional to search speed.

**Out-of-distribution (OOD) queries**

An additional difficulty with modern applications of similarity searching occurs when queries come from a statistical distribution that is different from the statistical distribution underlying the database vectors. Cross-modal querying - where a user uses a query from one modality to fetch similar elements from a different modality (e.g., in text-to-image applications, text queries are used to retrieve semantically similar images) - is an example. Alternatively, in some instances queries and database vectors are produced by different models, e.g., in question-answering applications. Cases involving queries having a statistical distribution than the statistical distribution underlying the database vectors makes applying vector compression techniques learned from the data itself a more challenging problem.

As described in further detail herein, dimensionality reduction can take place both at the query level and the database vector level. Input queries are modified and their dimensionality is reduced from the original before using them for distance computations in the search routine. Further, after constructing the index for the database vectors, similarity searching methods have the option to save the graph and data. In some embodiments, as described herein the data can be saved in two files, one with a reduced dimension and the other with a full dimension. In some embodiments, as will be discussed in greater detail, a low-dimensional target dimensionality is specified during the construction of a similarity search index. For example, the target dimensionality can be specified as a search hyperparameter of a similarity search index.

**LeanVec**

The technology described herein provides a framework, referred to as "LeanVec," that uses dimensionality reduction techniques to accelerate similarity searching for applications with high-dimensional deep learning embedding vectors. Embodiments combine dimensionality reduction and quantization techniques to further improve similarity search performance with no degradation in quality for high-dimensional vectors. Variants of LeanVec are introduced for two main cases: in-distribution (ID) and out-of-distribution (OOD) queries. For the ID case, embodiments can use the classical Principal Component Analysis (PCA) for dimensionality reduction. For the OOD case, embodiments use a selected one of three new alternate linear dimensionality reduction algorithms that find the optimal projection subspaces for the dataset and a representative query set to reduce the errors in the similarity computations. Moreover, LeanVec can be used to build high-quality graph indices in a fraction of the time required for the original vectors. Overall, LeanVec provides significant improvement in index build time and search performance over other approaches. Furthermore, the technology results in significant lowering of memory bandwidth requirements. As a result, the LeanVec technology provides improved similarity searching performance beneficial to accelerating many important modern deep learning applications.

Embodiments may start from a set of database vectors $\chi = \{x_i \in \mathbb{R}^D\}_{i=1}^n$ to be indexed and searched. The maximum inner product can be used as the similarity search metric, where one seeks to retrieve for a query **q** the k database vectors with the highest inner product with the query. Although the maximum inner product is the most popular choice for deep learning vectors, this choice comes without loss of generality as the common cosine similarity and Euclidean distance can be trivially mapped to this scenario by normalizing the vectors.

In some embodiments, LeanVec accelerates similarity searching for deep learning embedding vectors by using the approximation

$$\langle \mathbf{q}, \mathbf{x} \rangle \approx \langle \mathbf{Aq}, \mathbf{Bx} \rangle \qquad \text{Eq. (1A)}$$

while in other embodiments LeanVec also employs quantization in accelerating similarity searching for deep learning embedding vectors by using, as a variation of Equation 1A, the approximation

$$\langle \mathbf{q}, \mathbf{x} \rangle \approx \langle \mathbf{Aq}, \text{quant}(\mathbf{Bx}) \rangle \qquad \text{Eq. (1B)}$$

where in each case $\mathbf{A}, \mathbf{B} \in \mathbb{R}^{d \times D}$ are orthonormal projection matrices, $d < D$, and *quant*(*v*) is a method to quantize each dimension in *v*. Use of the orthonormal projection matrices **A** and **B** as components in the vector transformations of Equations 1A ad 1B provides for reducing the number of entries (dimensionality) of the database vectors, and (when employed) the quantization reduces the number of bits per entry. The reduced memory footprint decreases the time it takes to fetch each vector from memory. Furthermore, the lower dimensionality alleviates the algorithm's computational effort (i.e., requiring fewer fused multiply-add operations). For the quantization step, in some embodiments LVQ is used, as it is specifically designed to perform encoding/decoding with great efficiency, while incurring negligible search accuracy penalties. In some embodiments, a quantization strategy other than LVQ is used.

As will be described in more detail herein, the matrices **A** and **B** are interdependent, and typically determined based on expected distributions of the queries and of the database vectors. For example, expected distributions can be based on known or expected types of information in the queries and known or expected types of information in the database vectors.

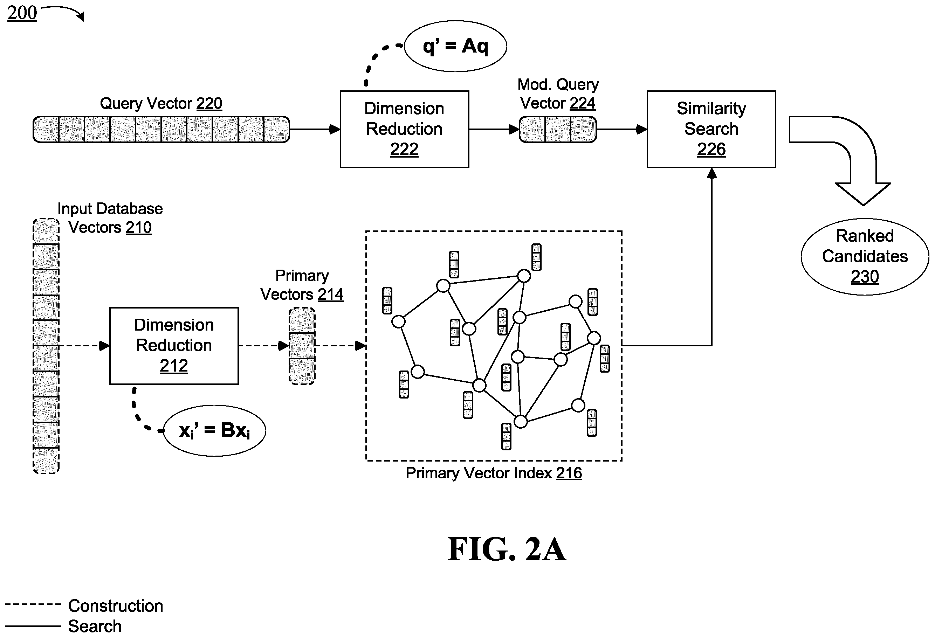

FIGs. 2A-2D illustrate four example alternative LeanVec frameworks (200, 240, 260, 280) that use dimensionality reduction techniques to accelerate similarity searching according to one or more embodiments, with reference to components and features described herein including but not limited to the figures and associated description. Each of the example alternative LeanVec frameworks (200, 240, 260, 280) include two phases: a construction phase and a search phase. The construction phase involves processing database vectors to produce a primary vector index; in some embodiments the construction phase also provides secondary vectors. The search phase involves processing a query vector and conducting a similarity search to produce ranked candidates; in some embodiments the search phase also uses the input database vectors or secondary vectors to re-rank candidates.

In the following discussion, *primary vectors* refer to the set { (**Bx**$_i$) | $x_i \in \chi$} and/or the set { quant(**Bx**$_i$) | $x_i \in \chi$}. *Secondary vectors* refer to the set { (**x**$_i$) | $x_i \in \chi$} and/or the set { quant(**x**$_i$) | $x_i \in \chi$}. That is, in some cases the secondary vectors are the same as the database vectors, while in other cases the secondary vectors are quantized versions of the database vectors. In each case, the secondary vectors are of the same dimensionality as the database vectors.

**Index construction:** Index (e.g., graph) construction typically occurs in advance of receiving and processing a query vector. Only the primary vectors (based at least on dimensionality reduction) are used for index (e.g., graph) construction. When graph-based indexing is used, the graph (index) includes the primary vectors as nodes and neighbor relationships between vectors as edges between nodes. While the secondary vectors, if employed, can be generated at the time the primary vectors are generated (e.g., in advance of receiving and processing a query vector), the secondary vectors are not used to construct the index (e.g., graph). The robustness of graph construction to quantization with LVQ has already been analyzed. Notably, experimental results show that the robustness extends to a dimensionality reduction as well. Because searches are an essential part of the graph construction process, the search acceleration described herein directly translates into graph construction acceleration.

The difficulties observed when searching with high-dimensional vectors using a graph index extend to the construction process of the graph index itself. In every graph index, the construction process can be divided into two main steps: search and pruning. Start from a directed graph G = (X , E), where the database vector set X is used as the node set and the edge set E is initialized depending on the specific graph-construction algorithm, where we may even start with an empty edge set E. To keep the search complexity bounded, each node in the graph has a maximum out-degree R. To build the graph, the following two-step update routine is iteratively performed for each node x in X: (1) Search: first run the search algorithm using the node x as the query on the current graph G, seeking a set of C of approximate nearest neighbors with cardinality larger than R. (2) Pruning: use C as a set of candidate nodes to form outgoing edges (or arcs) from x. To increase the navigability of the graph, a pruning algorithm is run on C, yielding a set C' contained in C with cardinality smaller than R. Then, replace all the arcs in E starting from x with the set $\{(x, x') \mid x' \in C'\}$. It is important to note that all pruning algorithms rely on computing distances between pairs of vectors in C.

Any slowdowns caused by working with high-dimensional vectors will carry over directly to the graph construction process. The runtime of the search and pruning algorithms are dominated by fetching high-dimensional vectors from memory and computing distances on them. LeanVec applies equally to the search and graph construction processes by alleviating memory pressure while remaining computationally lean. The graph construction technique detailed above is executed (at least once) for each node in the graph (i.e., for each vector in the database). Thus, the technique scales linearly with the graph size both in the number n of nodes and in the number of edges (this quantity is upper bounded by n*R). Consequently, the LeanVec acceleration has a linear impact on the graph construction runtime.

**Search:** In the search process, the query vector is used for traversing the graph by computing its similarity with the primary vectors encountered during the graph traversal. Some embodiments compensate for errors in the inner-product approximation by retrieving a number of candidates greater than k. Then, some embodiments use the set of secondary vectors to re-compute the inner products for those candidates and to return the top-*k*. The dimensionality reduction for the query, i.e., the multiplication **Aq,** is done only once per search, incurring a negligible overhead in the overall runtime.

Turning now to FIG. 2A, the diagram illustrates a first example LeanVec framework 200 according to one or more embodiments, with reference to components and features described herein including but not limited to the figures and associated description. The construction phase (denoted with dotted line arrows) of the framework 200 includes processing a set of input database vectors 210 to produce a primary vector index 216. The search phase (denoted with solid line arrows) includes processing a query vector 220 and conducting a similarity search to produce ranked candidates 230.

While the diagram of FIG. 2A illustrates a single vector of the input database vectors 210 with a dimensionality of 10, it will be understood that the input database vectors 210 will include a plurality of vectors - which can range in the tens, hundreds, thousands, etc. of vectors, each vector with a dimensionality that can range in the tens, hundreds, thousands, etc. Similarly, while the diagram of FIG. 2A illustrates a single vector of the primary vectors 214 with a dimensionality of 3, it will be understood that the primary vectors 214 will include a plurality of vectors, each vector with a dimensionality smaller than the dimensionality of the input database vectors 210.

In the construction phase, the input database vectors 210 are processed using a dimension reduction module 212 which reduces the dimensionality of the input database vectors 210. In embodiments the input database vectors 210 are accessed, such as being retrieved from a vector database (e.g., the database 102 in FIG. 1, already discussed), and can represent private and/or historically-derived knowledge (e.g., as a knowledge base). The dimension reduction module 212 generates primary vectors 214 according to the vector operation - i.e., applying a first vector transformation:

$$ x_i' = Bx_i \qquad\qquad Eq. (2) $$

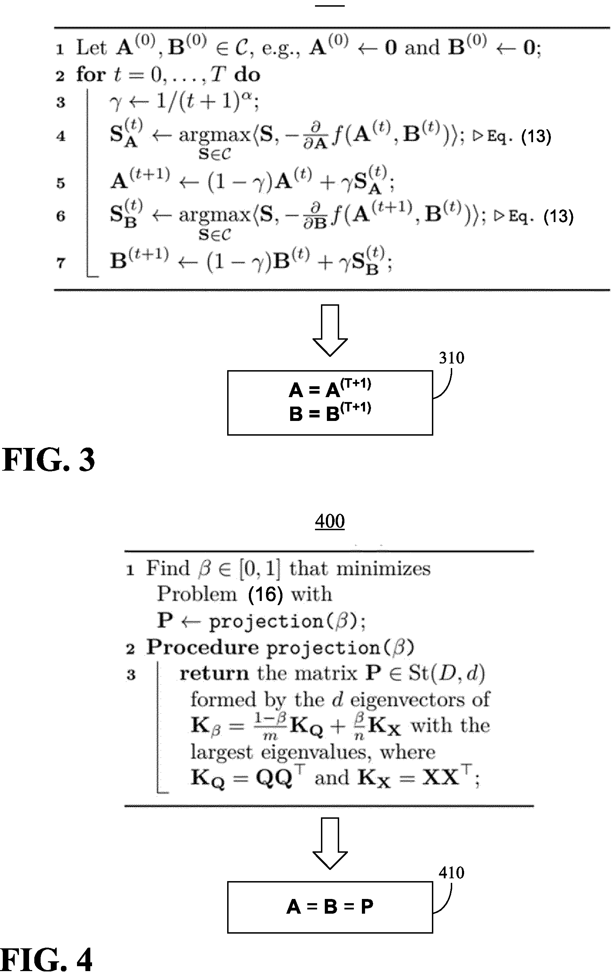

where $x_i$ are the input database vectors 210, $x_i'$ are denoted as primary vectors 214, and **B** is the orthonormal projection matrix (as introduced in Equations (1A) and (1B) above). That is, the matrix **B** is a component of the first vector transformation given by Equation (2). As mentioned above, the matrices **A** and **B** are interdependent and, thus, both are determined before or during the construction phase based on expected distributions of the queries and of the input database vectors. As a result of the first vector transformation, the primary vectors 214 each have a dimensionality smaller than the dimensionality associated with the set of the input database vectors 210. Further details regarding the dimensionality reduction techniques (including determining the matrices A and B) are provided below - including with reference to FIGs. 3-5.

The primary vectors 214 are then used to generate the primary vector index 216. In embodiments the primary vector index 216 is a graph representation of the primary vectors 214 including the neighbor relationships between primary vectors 214. In some embodiments, the primary vector index 216 is a non-graph-based representation. In embodiments, the primary vectors 214 and/or the primary vector index 216 are stored in a database (e.g., the database 102 in FIG. 1, already discussed), to be recalled and used during the search phase. Because the results of the construction phase (e.g., the primary vectors 214 and/or the primary vector index 216) are typically stored in a database, the construction phase can be performed at any time in advance of performing one or more queries (i.e., queries of an expected distribution).

In the search phase, an input query vector 220 is received. The query vector 220 can be generated from an input query (e.g., a user query) based on a query vectorization process (not shown) such as, e.g., a query vector tool. The query vectorization process can use any text or feature vector model. The query vector 220 is processed using a dimension reduction module 222 which reduces the dimensionality of the query vector 220. The dimension reduction module 222 generates a modified query vector 224 (i.e., a reduced-dimension query vector) according to the vector operation - i.e., applying a second vector transformation:

$$q' = Aq \hspace{4cm} \text{Eq. (3)}$$

where q is the input query vector 220, q' is the modified query vector 224, and A is the orthonormal projection matrix (as introduced in Equations (1A) and (1B) above). That is, the matrix A is a component of the second vector transformation given by Equation (3). As mentioned above, the matrices A and B are interdependent and, thus, both are determined before or during the construction phase based on expected distributions of incoming query vectors and of the database vectors. As a result of the second vector transformation, the modified query vector 224 has a dimensionality smaller than the dimensionality of the input query vector 220. Further details regarding the dimensionality reduction techniques (including determining the matrices **A** and **B)** are provided below - including with reference to FIGs. 3-5.

The search phase continues by conducting a similarity search via the similarity search module 226, using the modified query vector 224 and the primary vector index 216, to produce (e.g., obtain) a set of ranked candidates 230 for the query. In some embodiments, the similarity search module 226 operates using a graph-based similarity search to identify, based on the primary vector index 216, a set of vectors (e.g., from the primary vectors 214) that are most similar to the modified query vector 224. In some embodiments, the similarity search module 226 operates using a non-graph-based similarity search to identify, based on the primary vector index 216, a set of vectors (e.g., from the primary vectors 214) that are most similar to the modified query vector 224.

The ranked candidates 230 provide a set (e.g., list) of vectors from the primary vector index 216 (e.g., from the primary vectors 214) that are similar to the modified query vector 224. For example, for a graph-based similarity search, the ranked candidates 230 represent a set of nearest neighbors to the modified query vector 224. In some embodiments the ranked candidates 230 includes a list (e.g., index) of pointers to the input database vectors 210 (in addition to or as an alternative to providing a list of primary vectors 214).

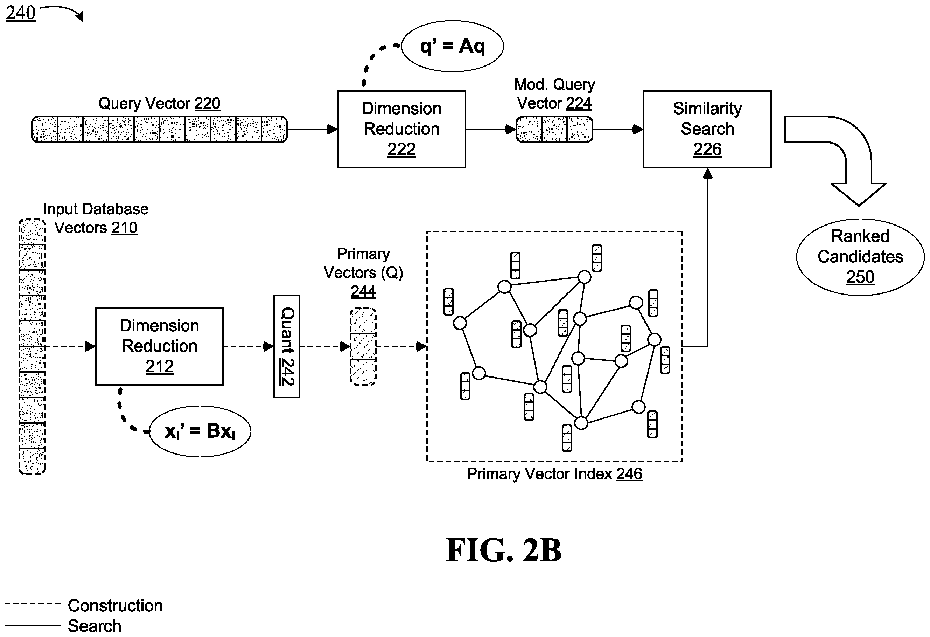

Turning now to FIG. 2B, the diagram illustrates a second example LeanVec framework 240 according to one or more embodiments, with reference to components and features described herein including but not limited to the figures and associated description. The framework 240 operates in a manner similar to the framework 200 (FIG. 2A, already discussed) and includes components and features the same as or similar to those in the framework 200. Discussion of those components, features and operations will not be repeated except as appropriate to describe the components and features of the framework 240.

The construction phase (denoted with dotted line arrows) of the framework 240 includes processing the set of input database vectors 210 to produce a primary vector index 246. More particularly, the input database vectors 210 are processed using the dimension reduction module 212. The reduced dimension vectors produced by the dimension reduction module 212 are then processed by a quantization module 242 to produce primary vectors 244 (which are in effect quantized in relation to the primary vectors 214 of FIG. 2A). The quantization module 242 operates to quantize - e.g., compress values (to reduce the number of bits) for - each element (e.g., in each dimension) of the reduced dimension vectors produced by the dimension reduction module 212. In some embodiments, the quantization module 242 implements LVQ quantization (as described above). In some embodiments, the quantization module 242 implements a quantization technique other than LVQ, such as another scalar quantization technique. In some embodiments, the quantization module 242 is incorporated within the dimension reduction module 212. The primary vectors 244 are, in effect, quantized versions of (e.g., quantized in relation to) the primary vectors 214 of FIG. 2A (already discussed).

The primary vectors 244 are then used to generate the primary vector index 246, which is similar to the primary vector index 216 of FIG. 2A (already discussed). In effect, the primary vector index 246 includes quantized versions of the vectors that are in the primary vector index 216. In embodiments the primary vector index 246 is a graph representation of the primary vectors 244 and the neighbor relationships between primary vectors 244. In some embodiments, the primary vector index 246 is a non-graph-based representation. In embodiments, the primary vectors 244 and/or the primary vector index 246 are stored in a database (e.g., the database 102 in FIG. 1, already discussed), to be recalled and used during the search phase.

The search phase (denoted with solid line arrows) of the framework 240 operates in a manner that is essentially the same as the search phase described herein with reference to FIG. 2A. That is, the search phase includes processing the query vector 220 using the dimension reduction module 222 to produce the modified query vector 224, and conducting a similarity search (via similarity search module 226) using the modified query vector 224 to produce ranked candidates 250 for the query. The main difference in the search phase between the example framework 240 of FIG. 2B and the example framework 200 of FIG. 2A is that in the framework 240 the similarity search is conducted using the primary vector index 246 (which includes quantized vectors), while in the framework 200 the similarity search is conducted using the primary vector index 216.

The ranked candidates 250 provide a set (e.g., list) of vectors from the primary vector index 246 (e.g., from the primary vectors 244) that are similar to the modified query vector 224. For example, for a graph-based similarity search, the ranked candidates 250 represent a set of nearest neighbors to the modified query vector 224. In some embodiments the ranked candidates 250 includes a list (e.g., index) of pointers to the input database vectors 210 (in addition to or as an alternative to providing a list of primary vectors 244).

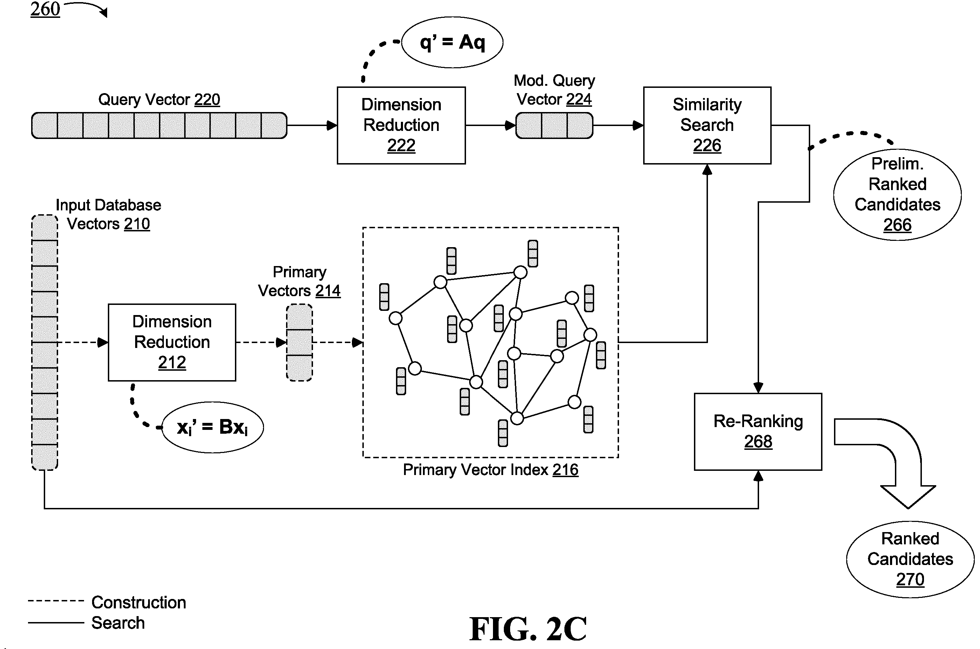

Turning now to FIG. 2C, the diagram illustrates a third example LeanVec framework 260 according to one or more embodiments, with reference to components and features described herein including but not limited to the figures and associated description. The framework 260 operates in a manner similar to the framework 200 (FIG. 2A, already discussed) and/or the framework 240 (FIG. 2B, already discussed), and includes components and features the same as or similar to those in the framework 200 and/or the framework 240. Discussion of those components, features and operations will not be repeated except as appropriate to describe the components and features of the framework 260.

The construction phase (denoted with dotted line arrows) of the framework 260 includes processing the set of input database vectors 210 via the dimension reduction module 212 to produce primary vectors 214 and then the primary vector index 216, as described herein with reference to FIG. 2A. In embodiments, the primary vectors 214 and/or the primary vector index 216 are stored in a database (e.g., the database 102 in FIG. 1, already discussed), to be recalled and used during the search phase.

The search phase (denoted with solid line arrows) of the framework 260 has two portions, and overall includes processing a query vector 220 and conducting a similarity search to produce ranked candidates 270. The first portion of the search phase of the framework 260 operates in a manner that is the same as the search phase described herein with reference to FIG. 2A. That is, the search phase includes processing the query vector 220 using the dimension reduction module 222 to produce the modified query vector 224, and conducting a similarity search (via similarity search module 226) using the modified query vector 224 and the primary vector index 216. The results of the similarity search are the preliminary ranked candidates 266 (which are effectively the same as the ranked candidates 230 in FIG. 2A, already discussed) for the query.

The second portion of the search phase of the framework 260 operates to refine the results of the similarity search by re-ranking the preliminary ranked candidates 266, via a re-ranking module 268, to produce the ranked candidates 270 for the query. Re-ranking is performed to compensate for and/or correct inaccuracies introduced by using reduced dimensionality for the query and database vectors for the similarity searching. In the framework 260, the re-ranking module 268 uses the input database vectors 210 to re-compute distances between the query and candidates in the preliminary ranked candidates 266. That is, the re-ranking module 268 uses the input database vectors 210 to re-compute the inner products for the preliminary ranked candidates 266 to generate the ranked candidates 270. For example, each vector (from the input database vectors 210) corresponding to the set of preliminary ranked candidates 266 is used to compute its inner product with the query vector. Then, the preliminary ranked candidates 266 are sorted in decreasing order using the inner product just computed, and the top-k sorted candidates are returned. Depending on the encoding of the secondary vectors (e.g., whether they are quantized or not), the computation of the inner-product can vary slightly. In some embodiments, the number of preliminary ranked candidates 266 is greater than k, and the re-ranking module 268 further prunes the number of final candidates to return the top-k candidates as the ranked candidates 270.

The ranked candidates 270 provide a set (e.g., list) of vectors from the primary vector index 216 (e.g., from the primary vectors 214) that are similar to the modified query vector 224. For example, for a graph-based similarity search, the ranked candidates 270 represent a set of nearest neighbors to the modified query vector 224. In some embodiments the ranked candidates 270 includes a list (e.g., index) of pointers to the input database vectors 210 (in addition to or as an alternative to providing a list of primary vectors 214). Typically, the accuracy in determining similarity of ranked candidates 270 to the modified query vector 224 as provided by the framework 260 (e.g., re-ranking the preliminary ranked candidates 266 via the re-ranking module 268) is improved over the similarity determined by the framework 200 and/or by the framework 240.

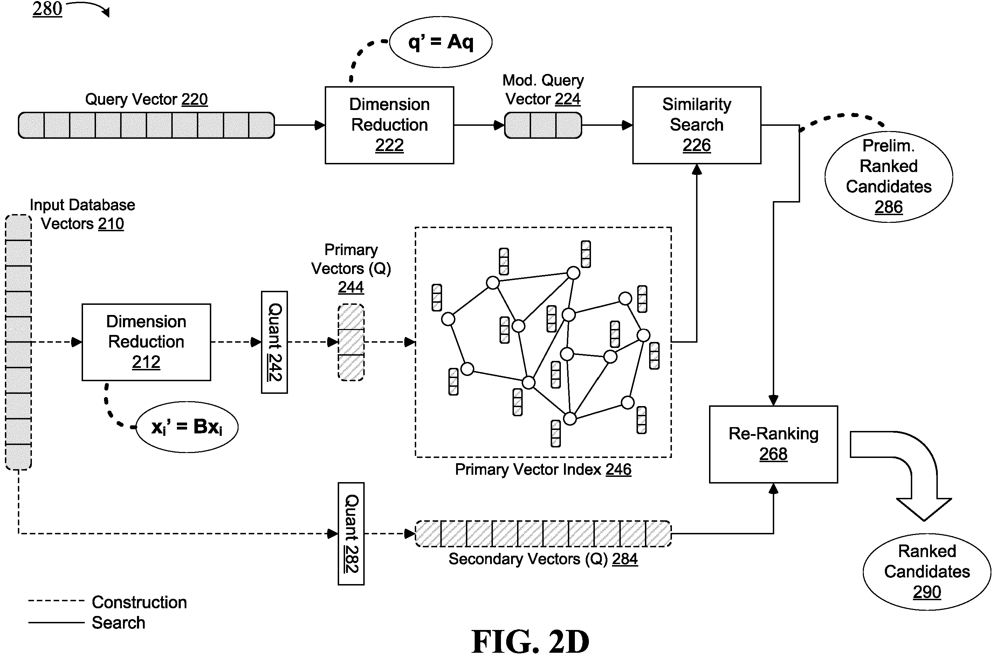

Turning now to FIG. 2D, the diagram illustrates a fourth example LeanVec framework 280 according to one or more embodiments, with reference to components and features described herein including but not limited to the figures and associated description. The framework 280 operates in a manner similar to the framework 200 (FIG. 2A, already discussed), the framework 240 (FIG. 2B, already discussed), and/or the framework 260 (FIG. 2C, already discussed), and includes components and features the same as or similar to those in the framework 200, the framework 240 and/or the framework 260. Discussion of those components, features and operations will not be repeated except as appropriate to describe the components and features of the framework 280.

The construction phase (denoted with dotted line arrows) of the framework 280 includes processing the set of input database vectors 210 via the dimension reduction module 212 and the quantization module 242 to produce primary vectors 244 and then the primary vector index 246, as described herein with reference to FIG. 2B. The construction phase of the framework 280 also includes providing a set of secondary vectors 284 which are used for re-ranking the results of the similarity search. In the framework 280 the secondary vectors 284 are obtained by quantizing the input database vectors 210 via the quantization module 282. The quantization module 282 operates to quantize - e.g., compress values (to reduce the number of bits) for - each element (e.g., in each dimension) of the input database vectors 210. In some embodiments, the quantization module 282 implements LVQ quantization (as described above). In some embodiments, the quantization module 282 implements a quantization technique other than LVQ, such as another scalar quantization technique. In embodiments, the primary vectors 244 and/or the primary vector index 246 are stored, along with the secondary vectors 284, in a database (e.g., the database 102 in FIG. 1, already discussed), to be recalled and used during the search phase.

The search phase (denoted with solid line arrows) of the framework 280 has two portions, and overall includes processing a query vector 220 and conducting a similarity search to produce ranked candidates 290 for the query. The first portion of the search phase of the framework 280 operates in a manner that is the same as the search phase described herein with reference to FIG. 2B. That is, the search phase includes processing the query vector 220 using the dimension reduction module 222 to produce the modified query vector 224, and conducting a similarity search (via similarity search module 226) using the modified query vector 224 and the primary vector index 246. The results of the similarity search are the preliminary ranked candidates 286 (which are effectively the same as the ranked candidates 250 in FIG. 2B, already discussed) for the query.

The second portion of the search phase of the framework 280 operates to refine the results of the similarity search by re-ranking the preliminary ranked candidates 286, via the re-ranking module 268, to produce the ranked candidates 290. Re-ranking is performed to compensate for and/or correct inaccuracies introduced by using reduced dimensionality for the query and database vectors for the similarity searching. In the framework 280, the re-ranking module 268 uses the secondary vectors 284 to re-compute distances between the query and candidates in the preliminary ranked candidates 286. That is, the re-ranking module 268 uses the secondary vectors 284 to re-compute the inner products for the preliminary ranked candidates 286 (as described above with reference to FIG. 2C) to generate the ranked candidates 290. In some embodiments, the number of preliminary ranked candidates 286 is greater than k, and the re-ranking module 268 further prunes the number of final candidates to return the top-k candidates as the ranked candidates 290.

The ranked candidates 290 provide a set (e.g., list) of vectors from the primary vector index 246 (e.g., from the primary vectors 244) that are similar to the modified query vector 224. For example, for a graph-based similarity search, the ranked candidates 290 represent a set of nearest neighbors to the modified query vector 224. In some embodiments the ranked candidates 290 includes a list (e.g., index) of pointers to the input database vectors 210 (in addition to or as an alternative to providing a list of primary vectors 244). Typically, the accuracy in determining similarity of ranked candidates 270 of ranked candidates 290 to the modified query vector 224 as provided by the framework 280 (e.g., via the re-ranking module 268 using the secondary vectors 284 to re-rank the preliminary ranked candidates 286) is improved over the similarity provided by the framework 240.

In some embodiments, the framework 280 includes the quantization module 242 but not the quantization module 282 (e.g., the quantization module 282 is bypassed). In some embodiments, the framework 280 includes the quantization module 282 but not the quantization module 242 (e.g., the quantization module 242 is bypassed).

In embodiments, the ranked candidates resulting from any one of the LeanVec frameworks (i.e., the ranked candidates 230 from the framework 200, the ranked candidates 250 from the framework 240, the ranked candidates 270 from the framework 260, or the ranked candidates 290 from the framework 280) are then provided to a next stage - e.g., in some cases along with the query vector 220 or the modified query vector 224 - for further analysis/processing. For example, in some embodiments the next stage is a pre-trained model or pre-trained neural network (such as, e.g., the pre-trained LLM 104c in FIG. 1, already discussed) that generates further information (e.g., an answer to the query). In some embodiments, new database vectors can be incrementally added to the vector database, and the primary vectors can be updated by processing the new database vectors via the dimension reduction module 212 and, alternatively, via the quantization module 242.

Some or all components and/or features of the framework 200, the framework 240, the framework 260, and/or the framework 280 can be implemented using one or more of a central processing unit (CPU), a graphics processing unit (GPU), an artificial intelligence (AI) accelerator, a field programmable gate array (FPGA) accelerator, an application specific integrated circuit (ASIC), and/or via a processor with software, or in a combination of a processor with software and an FPGA or ASIC, and/or in an AI / deep learning framework, such as, e.g., OpenVINO, PyTorch, Tensorflow, etc. or any similar framework. For example, components and/or features of the framework 200, the framework 240, the framework 260, and/or the framework 280 can be implemented within the RAG workflow 100 (FIG. 1, already discussed).

More particularly, components and/or features of the framework 200, the framework 240, the framework 260, and/or the framework 280 can be implemented in one or more modules as a set of program or logic instructions stored in a machine- or computer-readable storage medium such as random access memory (RAM), read only memory (ROM), programmable ROM (PROM), firmware, flash memory, etc., in hardware, or any combination thereof. For example, hardware implementations can include configurable logic, fixed-functionality logic, or any combination thereof. Examples of configurable logic include suitably configured programmable logic arrays (PLAs), FPGAs, complex programmable logic devices (CPLDs), and general purpose microprocessors. Examples of fixed-functionality logic include suitably configured ASICs, combinational logic circuits, and sequential logic circuits. The configurable or fixed-functionality logic can be implemented with complementary metal oxide semiconductor (CMOS) logic circuits, transistor-transistor logic (TTL) logic circuits, or other circuits.

For example, computer program code to carry out operations by the framework 200, the framework 240, the framework 260, and/or the framework 280 can be written in any combination of one or more programming languages, including an object-oriented programming language such as Java, JavaScript, Python, C#, C++, Perl, Smalltalk, or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

## Dimensionality reduction techniques

**LeanVec-ID** (Dimensionality reduction for in-distribution similarity searching): Beginning with a few standard definitions, the Stiefel manifold is the set of row-orthonormal matrices, formally defined as $St(D, d) = \{\mathbf{U} \in \mathbb{R}^{d \times D} | \mathbf{U}\mathbf{U}^{\mathrm{T}} = \mathbf{I}\}$ . Let $\|\blacksquare\|_{op}$ denote the standard spectral norm, defined as $\|\mathbf{A}\|_{op}$ = $sup$ $\{\|\mathbf{A}\mathbf{v}\|_2/\|\mathbf{v}\|_2 \mid \boldsymbol{v} \in \mathbb{R}^{D}$ , $v \neq 0\}$. The convex hull C of all row-orthonormal matrices in $St(D, d)$ is the unit-norm ball of the spectral norm, i.e.

$$\mathsf{C} = \{\mathbf{A} \mid \|\mathbf{A}\|_{op} \leq 1\} \qquad \text{Eq. (4)}$$

In the in-distribution (ID) case, the projection matrices are computed from the database vectors $\chi = \{\boldsymbol{x}_i \in \mathbb{R}^D\}_{i=1}^n$ . Let $d < D$. A matrix $\boldsymbol{M} \in \mathbb{R}^{d \times D}$ is used to obtain the low-dimensional representation

$$\mathbf{x}_i = \mathbf{M}^{\mathrm{T}}\mathbf{M}\mathbf{x}_i + \mathbf{e}_i \qquad \text{Eq. (5)}$$

where $\mathbf{e}_i = (\mathbf{I} - \mathbf{M}^{\mathrm{T}}\mathbf{M})\mathbf{x_i}$ is the representation error. An advantageous characteristic for **M** would be to define a $d$-dimensional orthogonal subspace of $\mathbb{R}^{D}$ , i.e., $\mathbf{M}\mathbf{M}^{\mathrm{T}} = \mathbf{I}$. The variable $\mathbf{e}_i$ can be represented losslessly using $D - d$ dimensions. Commonly, one would seek to find the matrix **M** that minimizes the errors $\mathbf{e}_i$ by solving [0084]

$$\min_{\mathbf{M} \in St(D,d)} \|\mathbf{X} - \mathbf{M}^{\mathrm{T}}\mathbf{M}\mathbf{X}\|_F^2 \qquad \text{Eq. (6)}$$

where $St(D, d) = \{\mathbf{U} \in \mathbb{R}^{d \times D} | \mathbf{U}\mathbf{U}^{\mathrm{T}} = \mathbf{I}\}$ , set of orthonormal matrices (Stiefel manifold) and the matrix $\mathbf{X} \in \mathbb{R}^{D \times n}$ is obtained by horizontally stacking the database vectors. This is the traditional Principal Component Analysis (PCA) problem, whose solution is given by keeping the d left singular vectors of X that correspond to the singular values with larger magnitudes. The representation provided herein approximates $\langle \boldsymbol{q}, \boldsymbol{x}_i \rangle \approx \langle \boldsymbol{q}, \boldsymbol{M}^{\boldsymbol{T}}\boldsymbol{M}\boldsymbol{x}_i \rangle = \langle \boldsymbol{Mq}, \boldsymbol{Mx}_i \rangle$ and thus $\boldsymbol{A} = \boldsymbol{B} = \boldsymbol{M}.$

**LeanVec-OOD** (Query-aware dimensionality reduction for out-of-distribution similarity searching): From the ID approximation in Equation (5) above, $\langle \mathbf{q}, \mathbf{x}_i \rangle - \langle \boldsymbol{Mq}, \mathbf{Mx_i} \rangle = \langle \mathbf{q}, \mathbf{e}_i \rangle$ results.

The smaller the magnitude of $\langle \mathbf{q}, \mathbf{e}_i \rangle$ is, the more accurate the approximation becomes. Observe, however, that a solution to Equation (6) can only produce guarantees about $\langle \mathbf{q}, \mathbf{e}_i \rangle$ when the queries and the database vectors are identically distributed. To address this problem, given database vectors $\chi = \{\boldsymbol{x}_i \in \mathbb{R}^D\}_{i=1}^n$ , and query vectors $\mathcal{Q} = \{\mathbf{q}_j \in \mathbb{R}^D\}_{j=1}^m$ the magnitude of $\langle \boldsymbol{q}_j, \boldsymbol{x}_i \rangle$ can be minimized directly.

Thus, given a representative set of query vectors $\boldsymbol{Q} = \left\{ \mathbf{q}_j \in \mathbb{R}^D \right\}_{j=1}^m$, the following alternative model is provided:

$$\mathbf{x}_i = \mathbf{A}^\mathrm{T}\mathbf{B}\mathbf{x}_i + \boldsymbol{\varepsilon}_i \qquad \text{Eq. (7)}$$

where $\varepsilon_i = (\mathrm{I} - \mathbf{A}^\mathrm{T}\mathbf{B})\mathbf{x}_i$ is the new error term. The technology described herein can now minimize $\langle \mathbf{q}_j, \varepsilon_i \rangle^2$ for all $i, j$ yielding the main optimization problem:

$$\min_{\mathbf{A},\,\mathbf{B} \in St(D,d)} \| \boldsymbol{Q}^\mathrm{T}\boldsymbol{A}^\mathrm{T}\mathbf{B}\mathbf{X} - \boldsymbol{Q}^\mathrm{T}\mathbf{X} \|_F^2 \qquad \text{Eq. (8)}$$

where $St(D,d) = \{ \mathbf{U} \in \mathbb{R}^{d \times D} | \mathbf{U}\mathbf{U}^\mathrm{T} = \mathbf{I} \}$, set of orthonormal matrices (Stiefel manifold). $\mathbf{X} \in \mathbb{R}^{D \times n}$ and $\mathbf{Q} \in \mathbb{R}^{D \times m}$ are obtained by horizontally stacking the database and query vectors, respectively. This dimensionality reduction model can be referred to as **LeanVec-OOD.** LeanVec-OOD can be used for similarity searching with the approximation $\langle \boldsymbol{q}, \boldsymbol{x}_i \rangle \approx \langle \boldsymbol{Aq}, \boldsymbol{Bx}_i \rangle$ where the lower dimensionality alleviates the computational burden of the procedure (i.e., requiring fewer fused multiply-add operations) while simultaneously reducing memory bandwidth pressure and footprint.

LeanVec-OOD allows suitable matrices for dimensionality reduction to be found and is specifically designed for the case where $\chi$ and $\boldsymbol{Q}$ are not drawn from the same distribution. However, if $\chi$ and $\boldsymbol{Q}$ are drawn from the same distribution, a determination may be made as to how LeanVec-OOD compares to PCA. It can be theoretically proven that LeanVec-OOD will perform similarly to PCA in the ID case and the experimental results show the same is true empirically as well. It should be noted that, among other differences, the LeanVec technology as described herein differs from traditional use of PCA in that LeanVec takes into consideration both query vectors and database vectors (e.g., including their expected distributions), whereas traditional PCA analysis only considers the queries or the database vectors, but not both simultaneously.

### LeanVec-OOD Procedures

As described herein, the matrices **A** and **B** (as discussed above, e.g., with reference to Equations 1A-1B, 2 and 3) used in the vector transformations are each determined based on the same algorithm. FIGs. 3-5 provide diagrams illustrating three example algorithms for determining components of vector transformations according to one or more embodiments, with reference to components and features described herein including but not limited to the figures and associated description. At least three enhanced LeanVec-OOD procedures can be used to optimize the loss in Equation (8) and thereby determine the matrices A and B (as discussed above, e.g., with reference to Equations 1A-1B, 2 and 3). These three procedures, which use sample or learning query vectors (e.g., of an expected type or distribution) and sample or learning database vectors (e.g., of an expected type or distribution), are presented below.

**Procedure 1** (Optimizing the LeanVec-OOD loss with a Frank-Wolfe procedure): Turning now to FIG. 3, the diagram illustrates (in summary form) an example algorithm 300, based on a Frank-Wolfe procedure, for determining components of vector transformations according to one or more embodiments. Optimizing Equation (8) is not trivial as it is a constrained optimization problem with a non-convex loss function. Additionally, its constraints are non-convex as the Stiefel manifold is a non-convex set. Here, in order to make the optimization of Equation (8) more amenable, a relaxed problem is defined:

$$\min_{\mathbf{A},\,\mathbf{B} \in C} f(\boldsymbol{A}, \boldsymbol{B}), \qquad \text{Eq. (9)}$$

where

$$f(\boldsymbol{A}, \boldsymbol{B}) = \| \boldsymbol{Q}^\mathrm{T}\boldsymbol{A}^\mathrm{T}\mathbf{B}\mathbf{X} - \boldsymbol{Q}^\mathrm{T}\mathbf{X} \|_F^2 \qquad \text{Eq. (10)}$$

Here, the non-convex constraints involving the Stiefel manifold are replaced by convex constraints involving its convex hull, Equation (1). Now, Problem (6) is convex and has a smooth loss function on **A** for a fixed **B** and vice versa. Moreover, these convex problems can be solved efficiently. A block coordinate descent (BCD) method can therefore be used, iteratively fixing one of the variables and updating the other one.

For these subproblems, embodiments use the Frank-Wolfe procedure (e.g., conditional gradient), which is a classical optimizer for solving a problem with a convex and continuously differentiable loss function $f$ where the variable belongs to a convex set $D$ [23]. Given an initial solution $\boldsymbol{y}^{(0)} \in \mathcal{D}$, the optimization procedure is given by the following iterations for t = 0, ..., T,

$$\boldsymbol{s} \leftarrow \underset{\boldsymbol{s} \in \mathcal{D}}{\operatorname{argmax}} \langle \boldsymbol{s}, -\nabla f(\boldsymbol{y}^{(t)}) \rangle \qquad \text{Eq. (11)}$$

$$\boldsymbol{y}^{(t+1)} \leftarrow (1 - \gamma)\boldsymbol{y}^{(t)} + \gamma \boldsymbol{s} \qquad \text{Eq. (12)}$$

Equation (11) computes the direction in $\mathcal{D}$ that yields the steepest descent, i.e., the one more aligned with $-\nabla f(\boldsymbol{y}^{(t)})$. The update in Equation (12) guarantees that the iterates remain in $D$ by using a convex combination of elements in $D$. As shown in FIG. 3, Equations 11 and 12 can be computed for the A matrix and the B matrix.

The function f in Equation (10) has continuous partial derivatives given by

$$\tfrac{\partial}{\partial \mathbf{A}} f(\mathbf{A}, \mathbf{B}) = 2\mathbf{B}\mathbf{K_X}\mathbf{B}^\top\mathbf{A}\mathbf{K_Q} - 2\mathbf{B}\mathbf{K_X}\mathbf{K_Q}, \quad \text{and} \quad \tfrac{\partial}{\partial \mathbf{B}} f(\mathbf{A}, \mathbf{B}) = 2\mathbf{A}\mathbf{K_Q}\mathbf{A}^\top\mathbf{B}\mathbf{K_X} - 2\mathbf{A}\mathbf{K_Q}\mathbf{K_X}.$$

....
$$\qquad \text{Eq. (13)}$$

where $K_Q = \mathbf{Q}\mathbf{Q}^\mathbf{T}$, $K_X = \mathbf{X}\mathbf{X}^\mathbf{T}$.

Equation (8) has an efficient solution for subproblems relevant to the technology described herein. Both updates can be written as $\sup_{\|s\|_{\text{op}} \le 1} \langle \mathbf{S}, \mathbf{C} \rangle$ where (.,.) is the standard matrix inner product and $\mathbf{C} \in \mathbb{R}^{d \times D}$ stands in either of the $d \times D$ gradient matrices $-\dfrac{\partial}{\partial A} f(\boldsymbol{A}, \boldsymbol{B})$ or $-\dfrac{\partial}{\partial B} f(\boldsymbol{A}, \boldsymbol{B})$. This linear problem has a solution given by S = $\mathbf{U}\mathbf{V}^\mathbf{T}$, where $\mathbf{U}\mathbf{\Sigma}\mathbf{V}^\mathbf{T}$ = **C** is the singular value decomposition of C. This update is very efficient for large datasets by working on $d \times D$ matrices.

Equipped with these tools, the complete optimization procedure in **Fehler! Verweisquelle konnte nicht gefunden werden.** can be posed. There, **A** (resp. **B**) is updated given a fixed **B** (resp. **A**) by running one Frank-Wolfe update. The factor $\alpha \in (0,1)$, for the step size $\gamma = 1/(t + 1)^\alpha$, can be replaced by a line search to speed up the optimization. In some embodiments there may be no need for such a performance tuning.

As shown in FIG. 3, for the Frank-Wolfe technique the resulting matrices **A** and **B** for use in the dimension-reducing vector transformations are provided as illustrated in block 310:

$$A = A^{(T+1)} \qquad \text{Eq. (14A)}$$

$$B = B^{(T+1)} \qquad \text{Eq. (14B)}$$

The Procedure 1 algorithm is guaranteed to converge to a solution of the mathematical optimization problem. The involved steps are very efficient, only involving matrix multiplications as the most computationally expensive operation. Further, the algorithm is relatively simple to implement in hardware platforms, as it relies on basic primitives.

**Procedure 2** (Optimizing the LeanVec-OOD loss with eigenvector search): Turning now to FIG. 4, the diagram illustrates (in summary form) an example algorithm 400, based on an eigenvector search, for determining components of vector transformations according to one or more embodiments. Developing the squared Frobenius norm, Equation (8) can be equivalently written as

$$\min_{\mathbf{A},\,\mathbf{B}\in St(D,d)} Tr(\mathbf{A}\mathbf{K_Q}\mathbf{A}^{\mathbf{T}}\mathbf{B}\mathbf{K_X}\mathbf{B}^{\mathbf{T}} + \mathbf{K_Q}\mathbf{K_X} - 2\mathbf{K_Q}\mathbf{A}^{\mathbf{T}}\mathbf{B}\mathbf{K_X}) \;\dots\; \text{Eq. (15)}$$

where

$$\mathbf{K_Q} = \mathbf{Q}\mathbf{Q}^{\mathbf{T}}, \mathbf{K_X} = \mathbf{X}\mathbf{X}^{\mathbf{T}}.$$

For this procedure, it may be assumed that A = B. This assumption leads to a new optimization technique for the LeanVec-OOD loss. Given **P** = **A** = **B** and eliminating constant factors, Equation (15) can be rewritten as:

$$\min_{\mathbf{P}\in St(D,d)} Tr(\mathbf{P}\mathbf{K_Q}\mathbf{P}^{\mathbf{T}}\mathbf{P}\mathbf{K_X}\mathbf{P}^{\mathbf{T}} - 2\mathbf{K_Q}\mathbf{P}^{\mathbf{T}}\mathbf{P}\mathbf{K_X}) \qquad \text{Eq. (16)}$$

Here, **P** can be aligned with both the d leading eigenvectors of $\mathbf{K_Q}$ and with those of $\mathbf{K_X}$. Now set **P** using the $d$ leading eigenvectors of $\mathbf{K_Q}$ + $\mathbf{K_X}$.

However, the matrices $\mathbf{K_Q}$ and $\mathbf{K_X}$ are summations over two different numbers of samples (i.e., $n$ and $m$ are not necessarily equal). This asymmetry would artificially give more weight, for example, to $\mathbf{K_X}$ if $n \gg$ m. This imbalance is compensated by scaling the loss in Equation (16) by the constant $\frac{1}{nm}$, obtaining

$$\min_{\mathbf{P}\in St(D,d)} Tr(\mathbf{P}(\tfrac{1}{m}\mathbf{K_Q})\mathbf{P}^{\mathbf{T}}\mathbf{P}(\tfrac{1}{n}\mathbf{K_X})\mathbf{P}^{\mathbf{T}} - 2(\tfrac{1}{m}\mathbf{K_Q})\mathbf{P}^{\mathbf{T}}\mathbf{P}(\tfrac{1}{n}\mathbf{K_X})) \quad \text{Eq. (17)}$$

Now, **P** could be set to the $d$ leading eigenvectors of $\frac{1}{m}\mathbf{K_Q} + \frac{1}{n}\mathbf{K_X}$. Although an improvement, this equal weighting is not empirically optimal. A scalar factor $\beta \in \mathbb{R}_+$ is therefore added, with the eigenvectors being

$$\mathbf{K_\beta} = \tfrac{1-\beta}{m}\mathbf{K_Q} + \tfrac{\beta}{n}\mathbf{K_X} \qquad\qquad \text{Eq. (18)}$$

Empirically, the loss in Equation (17) is a smooth function of $\beta$ when $\mathbf{P} \in \mathbb{R}^{d\times D}$ is formed by the d leading eigenvectors of $\mathbf{K_\beta}$. Moreover, the loss has a unique minimizer. A resulting optimization, summarized in **Fehler! Verweisquelle konnte nicht gefunden werden.,** uses a derivative-free scalar minimization technique to find the value of $\beta$ that provides the optimum balance.

As shown in FIG. 4, for the eigenvector search technique the resulting matrices A and B for use in the dimension-reducing vector transformations are provided as illustrated in block 410:

$$A = B = P \qquad\qquad\qquad \text{Eq. (19)}$$

The algorithm of Procedure 2 is highly efficient and achieves good local minima of the LeanVec-OOD loss. This algorithm terminates faster than Procedure 1, and it can arrive at better solutions. There is a tradeoff, however, in that Procedure 2 involves the use of more complex subroutines - e.g., multiple singular value decomposition (SVD) operations - which can make it harder to implement in certain less standard hardware platforms.

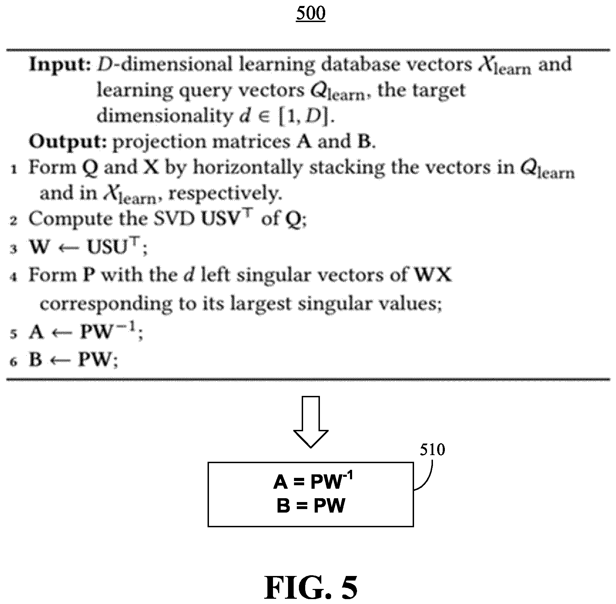

**Procedure 3** (Optimizing the LeanVec-OOD loss with closed-form SVD): Turning now to FIG. 5, the diagram illustrates (in summary form) an example algorithm 500, based on closed-form singular value decomposition, for determining components of vector transformations according to one or more embodiments. The optimization problem for Equation (8) can be equivalently written as

$$\min_{A,B\in St(D,d)} \sum_{q\in Q} \sum_{x\in X} \|\langle Aq, Bx\rangle - \langle q, x\rangle\|_F^2 \qquad \text{Eq. (20)}$$

It may be momentarily assumed that $P = A = B$. In this case, the LeanVec-OOD loss $\mathcal{L}$ in Equation (20) can be rewritten as:

$$\begin{aligned}
\mathcal{L} &= \sum_{x\in X} \|Q^\top (P^\top Px - x)\|_F^2 \\
&= \sum_{x\in X} \text{Tr}\left((P^\top Px - x)^\top QQ^\top (P^\top Px - x)\right) \\
&= \sum_{x\in X} \text{Tr}\left((P^\top Px - x)^\top US^2 U^\top (P^\top Px - x)\right) \\
&= \sum_{x\in X} \text{Tr}\left((P^\top Px - x)^\top W^\top W (P^\top Px - x)\right) \\
&= \sum_{x\in X} \|W (P^\top Px - x)\|_F^2,
\end{aligned} \qquad \text{Eq. (21)}$$

where $Q$ is a $D \times m$ matrix obtained by stacking the vectors in $\mathcal{Q}$ horizontally, $USV^T$ is the singular value (e.g., via SVD) of $Q$, and $W = USU^T$. The derivation emerges from the following identities by virtue of $U$ and $V$ being unitary matrices.

$$QQ^\top = USV^\top VSU^\top = US^2 U^\top = USU^\top USU^\top = W^\top W \qquad \text{Eq. (22)}$$

From Equation (21), it can be understood that embodiments are attempting to find a projection matrix $P$ that reduces the dimensionality under a Mahalanobis distance with weight matrix $W$. This can be interpreted as using the Euclidean distance after a whitening or sphering transformation. Here, the matrix $W$ is computed from $\mathcal{Q}$ instead of $\chi$ as in the classical whitening transformation.

In Equation (21), each vector is approximated by $x \approx P^T Px$. Alternatively, using the approximation $x \approx W^{-1}P^T PWx$ provides for the optimization of:

$$\min_{P\in St(D,d)} \sum_{x\in X} \sum_{x\in X} \|P^\top PWx - Wx\|_F^2 \qquad \text{Eq. (23)}$$

For simplicity it is assumed that $W$ is full-rank; if not, the inverse can be replaced with a pseudoinverse. The optimization of Equation (23) boils down to a singular value decomposition of the matrix $WX$, where $X$ is obtained by stacking the vectors in $\chi$ horizontally. The projection matrix $P$ can then be formed with the $d$ left singular vectors matrix $WX$ corresponding to its largest singular values.

Given the projection matrix $P$, the projection matrices $A$ and $B$ are constructed as follows:

$$\begin{aligned}
\langle q, x\rangle &= \langle q, W^{-1}Wx\rangle \\
&\approx \langle q, W^{-1}WW^{-1}P^\top PWx\rangle \\
&= \langle q, W^{-1}P^\top PWx\rangle \\
&= \langle PW^{-1}q, PWx\rangle
\end{aligned} \qquad \text{Eq. (24)}$$

As shown in FIG. 5, for the closed-form singular value decomposition technique, the resulting matrices A and B for use in the dimension-reducing vector transformations are provided as illustrated in block 510:

$$\mathbf{A} = \mathbf{P}\mathbf{W}^{-1} \qquad\qquad \text{Eq. (25A)}$$

and

$$\mathbf{B} = \mathbf{P}\mathbf{W} \qquad\qquad \text{Eq. (25B)}$$

The application of $\mathbf{W}^{-1}$ to the query vectors flattens the spectrum of their distribution, which becomes "spherical." Thus, this procedure can alternatively be referred to as LeanVec-Sphering**Fehler! Verweisquelle konnte nicht gefunden werden.**. Importantly, this procedure does not involve any hyperparameters beyond the target dimensionality $d$.

## Flexibility for selecting the target dimensionality

LeanVec-Sphering provides a mechanism to select the target dimensionality $d$ based on the magnitude of the singular values of $\mathbf{WX}$. In embodiments LeanVec-Sphering enables storing $D$-dimensional vectors by ordering the dimensions in decreasing order of the singular value magnitudes of $\mathbf{WX}$. Alternatively, $\alpha d < D$ dimensions can be stored, for some $\alpha > 1$. Accordingly, in embodiments the value of $d$ is selected during search (e.g., query runtime) instead of fixing it during the construction of the search index. Effectively, the target dimensionality $d$ is a tunable search hyperparameter that can be used to tradeoff accuracy for performance and vice versa seamlessly at query runtime without changing the underlying index.

While the algorithm of Procedure 3 has the same or similar features as in Procedure 2, Procedure 3 is more efficient, only requiring the computation of two SVDs, while Procedure 2 can involve performing many more SVDs. The solutions yielded by Procedure 3 are generally better than those provided by Procedure 1 or Procedure 2.

In some embodiments, the algorithms of Procedure 1 and/or Procedure 2 and/or Procedure 3 can be combined to form the algorithm used to determine the matrices **A** and **B,** which can yield better results. For example, one of the procedures (e.g., Procedure 1, Frank-Wolfe) can be used as initialization for another of the procedures (e.g., Procedure 2, eigenvector search), which is then used as described above to determine the matrices **A** and **B.** As another example, Procedure 2 (eigenvector search) can be combined with Procedure 3 (closed-form SVD) to determine the matrices **A** and **B.**

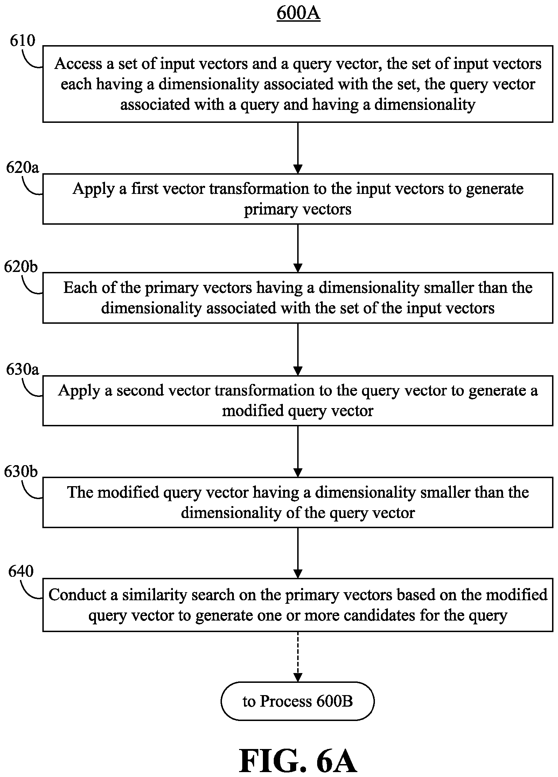

FIGs. 6A-6B provide flow diagrams illustrating an example method 600 (including process components 600A and 600B) of conducting a similarity search according to one or more embodiments, with reference to components and features described herein including but not limited to the figures and associated description. The method 600 can generally be implemented within the RAG workflow 100 (FIG. 1, already discussed), the framework 200 (FIG. 2A, already discussed), the framework 240 (FIG. 2B, already discussed), the framework 260 (FIG. 2C, already discussed), the framework 280 (FIG. 2D, already discussed), and/or in an AI / deep learning framework, such as, e.g., OpenVINO, PyTorch, Tensorflow, etc. or any similar framework. More particularly, the method 600 can be implemented as one or more modules as a set of logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out operations shown in the method 600 and/or functions associated therewith can be written in any combination of one or more programming languages, including an object-oriented programming language such as Java, JavaScript, Python, C#, C++, Perl, Smalltalk, or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Turning to FIG. 6A, illustrated processing block 610 provides for accessing a set of input vectors and a query vector, the set of input vectors each having a dimensionality associated with the set, the query vector associated with a query and having a dimensionality. Illustrated processing block 620a provides for applying a first vector transformation to the input vectors to generate primary vectors, where at block 620b each of the primary vectors has a dimensionality smaller than the dimensionality associated with the set of the input vectors. In some embodiments, the primary vectors are stored (e.g., in a database such as the database 102 in FIG. 1, already discussed) for later recall (e.g., to be used for conducting the similarity search, discussed for block 640 below). Illustrated processing block 630a provides for applying a second vector transformation to the query vector to generate a modified query vector, where at block 630b the modified query vector has a dimensionality smaller than the dimensionality of the query vector. Illustrated processing block 640 provides for conducting a similarity search on the primary vectors based on the modified query vector to generate one or more candidates for the query. In some embodiments, when the primary vectors are stored, they are retrieved from storage for use in conducting the similarity search.

In some embodiments, a first component of the first vector transformation is determined based on an algorithm and a second component of the second vector transformation is determined based on the same algorithm. For example, in embodiments the first vector transformation includes a first matrix operation, where the first component (e.g., the matrix B in Equations 1A-1B and as described above) of the first vector transformation is to be determined based on the algorithm, and the second vector transformation includes a second matrix operation, where the second component (e.g., the matrix A in Equations 1A-1B and as described above) of the second vector transformation is also to be determined based on the same algorithm.

In some embodiments, the first component of the first vector transformation includes a first orthonormal projection matrix, and the second component of the second vector transformation includes a second orthonormal projection matrix. In some embodiments, the first orthonormal projection matrix and the second orthonormal projection matrix are each based on an expected statistical distribution of query vectors and an expected statistical distribution of the database vectors.

In some embodiments, the algorithm includes one or more of a Frank-Wolfe procedure, an eigenvector search or a closed-form singular value decomposition. In some embodiments, the algorithm includes a closed-form singular value decomposition, where the dimensionality of the modified query vector is a tunable search hyperparameter selected at the time of access to the query vector.

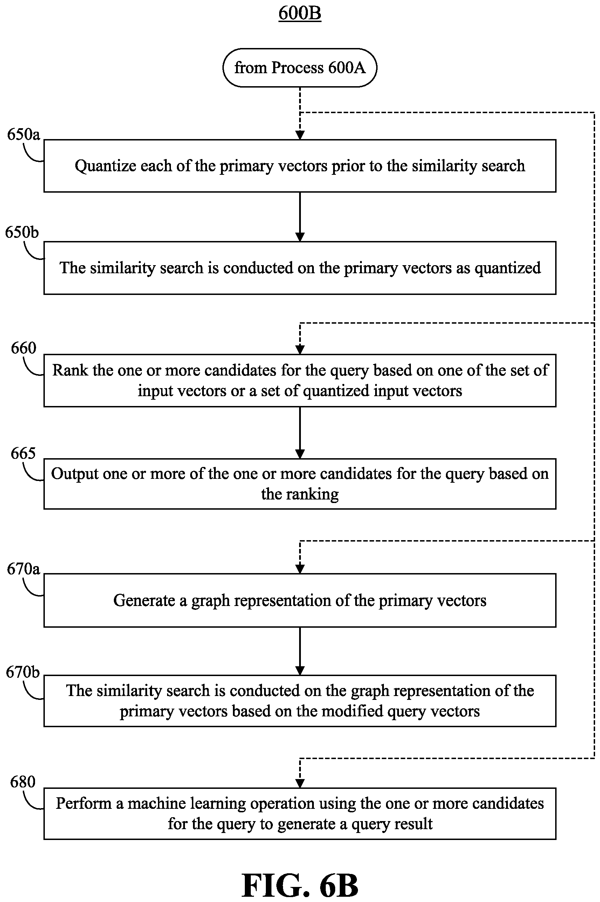

Turning now to FIG. 6B, in some embodiments illustrated processing block 650a provides for quantizing each of the primary vectors prior to the similarity search, where at block 650b the similarity search (block 640) is conducted on the primary vectors as quantized. In some embodiments, the primary vectors are quantized based on a locally-adaptive vector quantization (LVQ) procedure.

In some embodiments, illustrated processing block 660 provides for ranking the one or more candidates for the query based on one of the set of input vectors or a set of quantized input vectors (e.g., secondary vectors), and illustrated processing block 665 provides for outputting one or more of the one or more candidates for the query based on the ranking. In some embodiments, the quantized input vectors (e.g., secondary vectors) are quantized based on a locally-adaptive vector quantization (LVQ) procedure. In some embodiments, ranking the one or more candidates for the query based on one of the set of input vectors or a set of quantized input vectors includes re-ranking results of the similarity search by using the input vectors or the secondary vectors to re-compute inner products with the query vector.

In some embodiments, illustrated processing block 670a provides for generating a graph representation of the primary vectors (e.g., a primary vector index), where at block 670b the similarity search (block 640) is conducted on the graph representation of the primary vectors based on the modified query vectors. In some embodiments, the graph representation of the primary vectors is stored (e.g., in a database such as the database 102 in FIG. 1, already discussed) for later recall (e.g., to be used for conducting the similarity search).

In some embodiments, illustrated processing block 680 provides for performing a machine learning operation using the one or more candidates for the query (e.g., results of the similarity search) to generate a query result. For example, in some embodiments the one or more candidates for the query are input to a pre-trained model (which, in some embodiments, is a pre-trained neural network) - such as, e.g., the pre-trained LLM 104c (FIG. 1, already discussed) for inference service. The pretrained model operates using the one or more candidates for the query to generate the query result (e.g., based on how the model is trained).

As one example, in some embodiments the one or more candidates for the query are input to a pre-trained model to perform text-to-image translation. In the example, the query is a text (vector) and the database contains images (vectors). Using the similarity search technology disclosed herein, images are retrieved from the database based on the text query, and the retrieved images are then passed to a pre-trained model to synthesize a new image. As another example, in some embodiments the one or more candidates for the query are input to a pre-trained model to perform question-answering. In this example, the query is a question (vector) and the database contains information (vectors) that can be used for potential answers. Using the similarity search technology disclosed herein, information is retrieved based on the input query. Then, the pre-trained model is used to process the retrieved information to create an answer. As another example, in some embodiments the one or more candidates for the query are input to a pre-trained model to perform code generation. The query can be a verbal description (vector) of characteristics of a desired algorithm. The database consists of code (vectors). Using the similarity search technology disclosed herein, code is retrieved based on the input query. The

# EP 4 645 110 A1

retrieved code can then be used by the pre-trained model to create a code implementation of the desired algorithm. In some embodiments the machine learning operation is also provided with an input query vector (e.g., the query vector 220 or the modified query vector 224) along with the one or more candidates for the query as input.

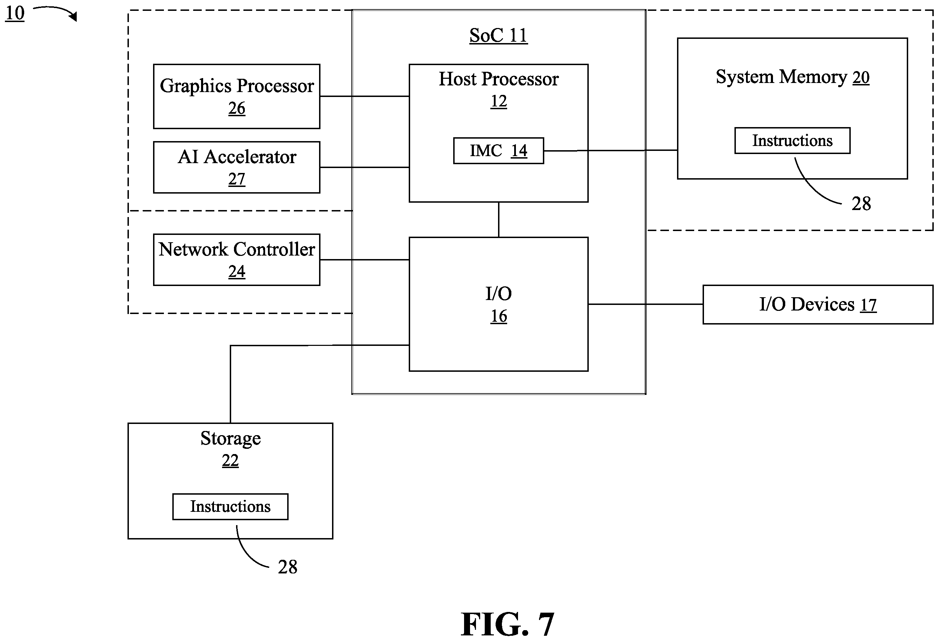

FIG. 7 shows a block diagram illustrating an example performance-enhanced computing system 10 for vector dimension reduction for similarity searching according to one or more embodiments, with reference to components and features described herein including but not limited to the figures and associated description. The system 10 can generally be part of an electronic device/platform having computing and/or communications functionality (e.g., a server, cloud infrastructure controller, database controller, notebook computer, desktop computer, personal digital assistant/PDA, tablet computer, convertible tablet, smart phone, etc.), imaging functionality (e.g., camera, camcorder), media playing functionality (e.g., smart television/TV), wearable functionality (e.g., watch, eyewear, headwear, footwear, jewelry, or other wearable devices), vehicular functionality (e.g., car, truck, motorcycle), robotic functionality (e.g., robot or autonomous robot), Internet of Things (IoT) functionality, etc., or any combination thereof.

In the illustrated example, the system 10 includes a host processor 12 (e.g., central processing unit/CPU) having an integrated memory controller (IMC) 14 that is coupled to system memory 20 (e.g., dual inline memory module/DIMM including dynamic RAM/DRAM). The host processor 12 can include any type of processing device, such as, e.g., microcontroller, microprocessor, RISC processor, ASIC, etc., along with associated processing modules or circuitry. The system memory 20 can include any non-transitory machine- or computer-readable storage medium such as RAM, ROM, PROM, EEPROM, firmware, flash memory, etc., configurable logic such as, for example, PLAs, FPGAs, CPLDs, fixed-functionality hardware logic using circuit technology such as, for example, ASIC, CMOS or TTL technology, or any combination thereof suitable for storing instructions 28.

In an embodiment, the system 10 includes an input/output (I/O) module 16 that is coupled to the host processor 12. The I/O module 16 communicates with for example, one or more input/output (I/O) devices 17, a network controller 24 (e.g., wired and/or wireless NIC), and storage (e.g., mass storage) 22. The storage 22 is comprised of any appropriate non-transitory machine- or computer-readable memory type (e.g., flash memory, DRAM, SRAM (static random access memory), solid state drive (SSD), hard disk drive (HDD), optical disk, etc.). The storage 22 can thus include mass storage. In some embodiments, the host processor 12 and/ or the I/O module 16 communicate with the storage 22 (all or portions thereof) via the network controller 24. In some embodiments, the system 10 also includes a graphics processor 26 (e.g., a graphics processing unit/GPU) and/or an AI accelerator 27. In an embodiment, the system 10 also includes a vision processing unit (VPU), not shown.

The host processor 12 and the I/O module 16 can be implemented together on a semiconductor die as a system on chip (SoC) 11, shown encased in a solid line. The SoC 11 can therefore operate as a computing apparatus for vector dimension reduction for similarity searching. In some embodiments, the SoC 11 also includes one or more of the system memory 20 (or portion thereof), the network controller 24, and/or the GPU 26 (shown encased in dotted lines). In some embodiments, the SoC 11 also includes other components of the system 10 (such as, e.g., the AI accelerator 27).

In embodiments, the host processor 12, the GPU 26) and/or the AI accelerator 27 execute program instructions 28 retrieved from the system memory 20 and/or the storage 22 to perform one or more aspects of process 600 as described herein with reference to FIGs. 6A-6B. The system 10 can implement one or more aspects of the RAG workflow 100, the framework 200, the framework 240, the framework 260, and/or the framework 280 as described herein with reference to FIGs. 1, 2A-2D, 3, 4, 5, and/or 6A-6B. The system 10 is therefore considered to be performance-enhanced at least to the extent that the technology provides for improved vector dimension reduction at both the query level and database level to accelerate similarity searching.

For example, the computing system 10 can use the contextual data in variety of the RAG settings discussed above. For example, the computing system 10 operating RAG technology can be deployed in consumer goods and retail applications, in healthcare and medicine applications, in manufacturing environments, in media and entertainment applications, in financial services applications, as well as in myriad other applications.

Computer program code to carry out the processes described above can be written in any combination of one or more programming languages, including an object-oriented programming language such as JAVA, JAVASCRIPT, PYTHON, SMALLTALK, C++ or the like and/or conventional procedural programming languages, such as the "C" programming language or similar programming languages, and implemented as program instructions 28. Additionally, program instructions 28 can include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, microprocessor, etc.).

I/O devices 17 can include one or more of input devices, such as a touchscreen, keyboard, mouse, cursor-control device, microphone, digital camera, video recorder, camcorder, biometric scanners and/or sensors; input devices can be used to enter information and interact with system 10 and/or with other devices. The I/O devices 17 can also include one or more of output devices, such as a display (e.g., touchscreen, liquid crystal display/LCD, light emitting diode/LED display, plasma panels, etc.), speakers and/or other visual or audio output devices. The input and/or output devices can be used,

17

e.g., to provide a user interface.

For example, the computing system 10 can use the contextual data in variety of RAG settings. For example, in consumer goods and retail applications, the computing system 10 might be deployed in virtual fitting rooms, delivery and installation environments, in-store product-finding assistance environments, demand prediction and inventory planning environments, novel product design environments, etc., to augment pre-trained models with proprietary data. In healthcare and medicine applications, the computing system 10 may be used to assist busy front-line staff, transcribe and summarize medical notes, answer medical questions as a chatbot, inform diagnosis and treatments via predictive analytics, etc., with organization-specific context data. In manufacturing environments, the computing system 10 can be deployed as an expert copilot for technicians, in conversational interactions with machines, in prescriptive and proactive field service, in natural language troubleshooting, in warranty status and documentation, in recovery strategy solutions (e.g., understanding process bottlenecks), and so forth.

In media and entertainment applications, the computing system 10 can be used to perform intelligent search and tailored content delivery, headline and copy development, provide real-time feedback on content quality, personalize playlists, news digests and recommendations, conduct interactive storytelling via viewer choices, make targeted offers and/or subscription plans, monitor network traffic to detect copyright infringement, etc. In financial services applications, the computing system 10 may be used to uncover trading signals, alert traders to vulnerable positions, accelerate underwriting decisions, optimize and rebuild legacy systems, reverse-engineer banking and insurance models, monitor for potential financial crimes and fraud, automate data gathering for regulatory compliance, extract insights from corporate disclosures, etc.

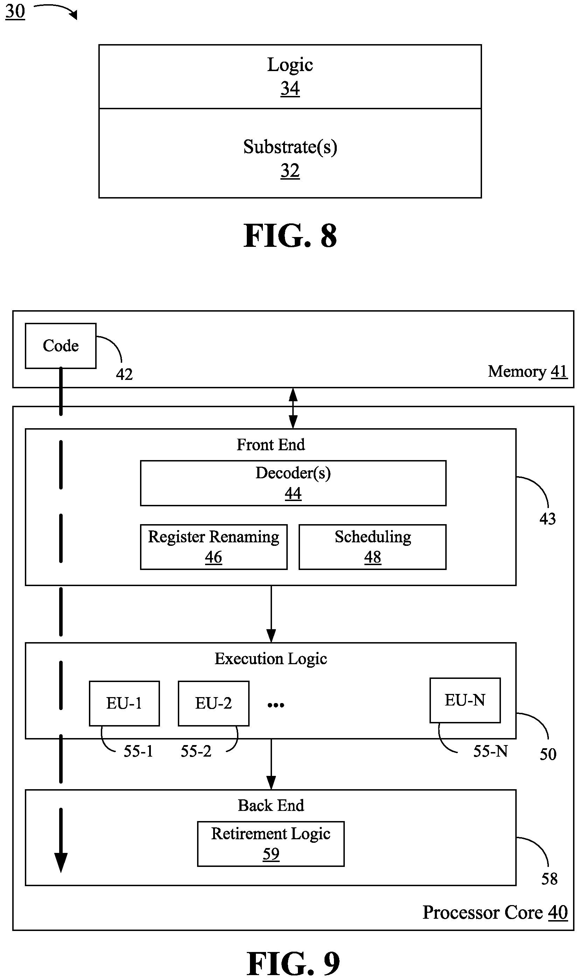

FIG. 8 shows a block diagram illustrating an example semiconductor apparatus 30 for vector dimension reduction for similarity searching according to one or more embodiments, with reference to components and features described herein including but not limited to the figures and associated description. The semiconductor apparatus 30 can be implemented, e.g., as a chip, die, or other semiconductor package. The semiconductor apparatus 30 can include one or more substrates 32 comprised of, e.g., silicon, sapphire, gallium arsenide, etc. The semiconductor apparatus 30 can also include logic 34 comprised of, e.g., transistor array(s) and other integrated circuit (IC) components) coupled to the substrate(s) 32. The logic 34 can be implemented at least partly in configurable logic or fixed-functionality logic hardware. The logic 34 can implement the system on chip (SoC) 11 described above with reference to FIG. 7. The logic 34 can implement one or more aspects of the processes described above, including the process 600. The logic 34 can implement one or more aspects of the RAG workflow 100, the framework 200, the framework 240, the framework 260, and/or the framework 280 as described herein with reference to FIGs. 1, 2A-2D, 3, 4, 5, and/or 6A-6B. The apparatus 30 is therefore considered to be performance-enhanced at least to the extent that the technology provides for improved vector dimension reduction at both the query level and database level to accelerate similarity searching.

The semiconductor apparatus 30 can be constructed using any appropriate semiconductor manufacturing processes or techniques. For example, the logic 34 can include transistor channel regions that are positioned (e.g., embedded) within the substrate(s) 32. Thus, the interface between the logic 34 and the substrate(s) 32 may not be an abrupt junction. The logic 34 can also be considered to include an epitaxial layer that is grown on an initial wafer of the substrate(s) 32.

FIG. 9 is a block diagram illustrating an example processor core 40 according to one or more embodiments, with reference to components and features described herein including but not limited to the figures and associated description. The processor core 40 can be the core for any type of processor, such as a micro-processor, an embedded processor, a digital signal processor (DSP), a network processor, a graphics processing unit (GPU), or other device to execute code. Although only one processor core 40 is illustrated in FIG. 9, a processing element can alternatively include more than one of the processor core 40 illustrated in FIG. 9. The processor core 40 can be a single-threaded core or, for at least one embodiment, the processor core 40 can be multithreaded in that it can include more than one hardware thread context (or "logical processor") per core.

FIG. 9 also illustrates a memory 41 coupled to the processor core 40. The memory 41 can be any of a wide variety of memories (including various layers of memory hierarchy) as are known or otherwise available to those of skill in the art. The memory 41 can include one or more code 42 instruction(s) to be executed by the processor core 40. The code 42 can implement one or more aspects of the processes described above. The processor core 40 can implement one or more aspects of the RAG workflow 100, the framework 200, the framework 240, the framework 260, and/or the framework 280 as described herein with reference to FIGs. 1, 2A-2D, 3, 4, 5, and/or 6A-6B. The processor core 40 can follow a program sequence of instructions indicated by the code 42. Each instruction can enter a front end portion 43 and be processed by one or more decoders 44. The decoder 44 can generate as its output a micro operation such as a fixed width micro operation in a predefined format, or can generate other instructions, microinstructions, or control signals which reflect the original code instruction. The illustrated front end portion 43 also includes register renaming logic 46 and scheduling logic 48, which generally allocate resources and queue the operation corresponding to the convert instruction for execution.

The processor core 40 is shown including execution logic 50 having a set of execution units 55-1 through 55-N. Some embodiments can include a number of execution units dedicated to specific functions or sets of functions. Other embodiments can include only one execution unit or one execution unit that can perform a particular function. The illustrated execution logic 50 performs the operations specified by code instructions.

After completion of execution of the operations specified by the code instructions, back end logic 58 retires the instructions of code 42. In one embodiment, the processor core 40 allows out of order execution but requires in order retirement of instructions. Retirement logic 59 can take a variety of forms as known to those of skill in the art (e.g., re-order buffers or the like). In this manner, the processor core 40 is transformed during execution of the code 42, at least in terms of the output generated by the decoder, the hardware registers and tables utilized by the register renaming logic 46, and any registers (not shown) modified by the execution logic 50.

Although not illustrated in FIG. 9, a processing element can include other elements on chip with the processor core 40. For example, a processing element can include memory control logic along with the processor core 40. The processing element can include I/O control logic and/or can include I/O control logic integrated with memory control logic. The processing element can also include one or more caches.

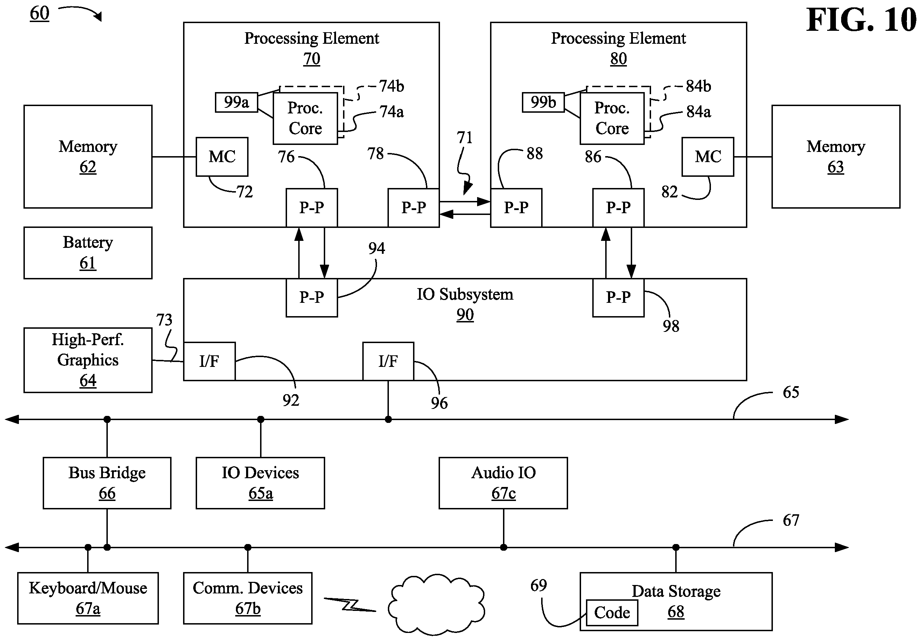

FIG. 10 is a block diagram illustrating an example of a multi-processor based computing system 60 according to one or more embodiments, with reference to components and features described herein including but not limited to the figures and associated description. The multiprocessor system 60 includes a first processing element 70 and a second processing element 80. While two processing elements 70 and 80 are shown, it is to be understood that an embodiment of the system 60 can also include only one such processing element.

The system 60 is illustrated as a point-to-point interconnect system, wherein the first processing element 70 and the second processing element 80 are coupled via a point-to-point interconnect 71. It should be understood that any or all of the interconnects illustrated in FIG. 10 can be implemented as a multi-drop bus rather than point-to-point interconnect.

As shown in FIG. 10, each of the processing elements 70 and 80 can be multicore processors, including first and second processor cores (i.e., processor cores 74a and 74b and processor cores 84a and 84b). Such cores 74a, 74b, 84a, 84b can be configured to execute instruction code in a manner similar to that discussed above in connection with FIG. 9.

Each processing element 70, 80 can include at least one shared cache 99a, 99b. The shared cache 99a, 99b can store data (e.g., instructions) that are utilized by one or more components of the processor, such as the cores 74a, 74b and 84a, 84b, respectively. For example, the shared cache 99a, 99b can locally cache data stored in a memory 62, 63 for faster access by components of the processor. In one or more embodiments, the shared cache 99a, 99b can include one or more mid-level caches, such as level 2 (L2), level 3 (L3), level 4 (L4), or other levels of cache, a last level cache (LLC), and/or combinations thereof.

While shown with only two processing elements 70, 80, it is to be understood that the scope of the embodiments is not so limited. In other embodiments, one or more additional processing elements can be present in a given processor. Alternatively, one or more of the processing elements 70, 80 can be an element other than a processor, such as an accelerator or a field programmable gate array. For example, additional processing element(s) can include additional processors(s) that are the same as a first processor 70, additional processor(s) that are heterogeneous or asymmetric to processor a first processor 70, accelerators (such as, e.g., graphics accelerators or digital signal processing (DSP) units), field programmable gate arrays, or any other processing element. There can be a variety of differences between the processing elements 70, 80 in terms of a spectrum of metrics of merit including architectural, micro architectural, thermal, power consumption characteristics, and the like. These differences can effectively manifest themselves as asymmetry and heterogeneity amongst the processing elements 70, 80. For at least one embodiment, the various processing elements 70, 80 can reside in the same die package.

The first processing element 70 can further include memory controller logic (MC) 72 and point-to-point (P-P) interfaces 76 and 78. Similarly, the second processing element 80 can include a MC 82 and P-P interfaces 86 and 88. As shown in FIG. 10, MC's 72 and 82 couple the processors to respective memories, namely a memory 62 and a memory 63, which can be portions of main memory locally attached to the respective processors. While the MC 72 and 82 is illustrated as integrated into the processing elements 70, 80, for alternative embodiments the MC logic can be discrete logic outside the processing elements 70, 80 rather than integrated therein.

The first processing element 70 and the second processing element 80 can be coupled to an I/O subsystem 90 via P-P interconnects 76 and 86, respectively. As shown in FIG. 10, the I/O subsystem 90 includes P-P interfaces 94 and 98. Furthermore, the I/O subsystem 90 includes an interface 92 to couple I/O subsystem 90 with a high performance graphics engine 64. In one embodiment, a bus 73 can be used to couple the graphics engine 64 to the I/O subsystem 90. Alternately, a point-to-point interconnect can couple these components.

In turn, the I/O subsystem 90 can be coupled to a first bus 65 via an interface 96. In one embodiment, the first bus 65 can be a Peripheral Component Interconnect (PCI) bus, or a bus such as a PCI Express bus or another third generation I/O interconnect bus, although the scope of the embodiments are not so limited.

As shown in FIG. 10, various I/O devices 65a (e.g., biometric scanners, speakers, cameras, and/or sensors) can be coupled to the first bus 65, along with a bus bridge 66 which can couple the first bus 65 to a second bus 67. In one embodiment, the second bus 67 can be a low pin count (LPC) bus. Various devices can be coupled to the second bus 67 including, for example, a keyboard/mouse 67a, communication device(s) 67b, and a data storage unit 68 such as a disk drive or other mass storage device which can include code 69, in one embodiment. The illustrated code 69 can implement one or more aspects of the processes described above, including the process 600. The illustrated code 69 can be similar to the code 42 (FIG. 9), already discussed. Further, an audio I/O 67c can be coupled to second bus 67 and a battery 61 can supply power to the computing system 60. The system 60 can implement one or more aspects of the RAG workflow 100, the framework 200, the framework 240, the framework 260, and/or the framework 280 as described herein with reference to FIGs. 1, 2A-2D, 3, 4, 5, and/or 6A-6B. .

Note that other embodiments are contemplated. For example, instead of the point-to-point architecture of FIG. 10, a system can implement a multi-drop bus or another such communication topology. Also, the elements of FIG. 10 can alternatively be partitioned using more or fewer integrated chips than shown in FIG. 10.

Embodiments of each of the above systems, devices, components and/or methods, including the RAG workflow 100, the framework 200, the framework 240, the framework 260, and/or the framework 280, the algorithm 300, the algorithm 400, the algorithm 500, and/or the method 600, and/or any other system components, can be implemented in hardware, software, or any suitable combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits. For example, embodiments of each of the above systems, devices, components and/or methods can be implemented via the system 10 (FIG. 7, already discussed), the semiconductor apparatus 30 (FIG. 8, already discussed), the processor 40 (FIG. 9, already discussed), and/or the computing system 60 (FIG. 10, already discussed).

Alternatively, or additionally, all or portions of the foregoing systems and/or devices and/or components and/or methods can be implemented in one or more modules as a set of program or logic instructions stored in a machine- or computer-readable storage medium such as RAM, ROM, PROM, firmware, flash memory, etc., to be executed by a processor or computing device. For example, computer program code to carry out the operations of the components can be written in any combination of one or more operating system (OS) applicable/appropriate programming languages, including an object-oriented programming language such as PYTHON, PERL, JAVA, SMALLTALK, C++, C# or the like and conventional procedural programming languages, such as the "C" programming language or similar programming languages.

In one example, the technology described herein is incorporated into the Scalable Vector Search (SVS) library from INTEL. SVS delivers fast vector search capabilities, optimizing retrieval times and improving overall system performance. Furthermore, some embodiments use performance optimizations such as, e.g., vectorization using advanced vector extension (AVX) vector instructions (e.g., AVX512), prefetching, the Intel oneAPI Math Kernel Library (OneMKL) for singular value decomposition (SVD)/Matrix Multiplication, etc.

Additional Notes and Examples:

Example C1 includes at least one computer readable storage medium comprising a plurality of executable program instructions which, when executed by a computing system, cause the computing system to access a set of input vectors and a query vector, the set of input vectors each having a dimensionality associated with the set, the query vector associated with a query and having a dimensionality, apply a first vector transformation to the input vectors to generate primary vectors, each of the primary vectors having a dimensionality smaller than the dimensionality associated with the set of the input vectors, apply a second vector transformation to the query vector to generate a modified query vector, the modified query vector having a dimensionality smaller than the dimensionality of the query vector, and conduct a similarity search on the primary vectors based on the modified query vector to generate one or more candidates for the query.

Example C2 includes the at least one computer readable storage medium of Example C1, wherein a first component of the first vector transformation is to be determined based on an algorithm and a second component of the second vector transformation is to be determined based on the same algorithm.

Example C3 includes the at least one computer readable storage medium of Example C1 or C2, wherein the first component of the first vector transformation comprises a first orthonormal projection matrix, wherein the second component of the second vector transformation comprises a second orthonormal projection matrix, and wherein the first orthonormal projection matrix and the second orthonormal projection matrix are each based on an expected statistical distribution of query vectors and an expected statistical distribution of the input vectors.

Example C4 includes the at least one computer readable storage medium of any of Examples C1-C3, wherein the algorithm comprises one or more of a Frank-Wolfe procedure, an eigenvector search or a closed-form singular value decomposition.

Example C5 includes the at least one computer readable storage medium of any of Examples C1-C3, wherein the algorithm comprises a closed-form singular value decomposition, and wherein the dimensionality of the modified query vector is a tunable search hyperparameter selected at the time of access to the query vector.

Example C6 includes the at least one computer readable storage medium of any of Examples C1-C5, wherein the instructions, when executed, further cause the computing system to quantize each of the primary vectors prior to the similarity search, and wherein the similarity search is to be conducted on the primary vectors as quantized.

Example C7 includes the at least one computer readable storage medium of any of Examples C1-C6, wherein the primary vectors are quantized based on a locally-adaptive vector quantization (LVQ) procedure.

Example C8 includes the at least one computer readable storage medium of any of Examples C1-C7, wherein the instructions, when executed, further cause the computing system to rank the one or more candidates for the query based on one of the set of input vectors or a set of quantized input vectors, and output one or more of the one or more candidates for the query based on the ranking.

Example C9 includes the at least one computer readable storage medium of any of Examples C1-C8, wherein the instructions, when executed, further cause the computing system to generate a graph representation of the primary vectors, wherein the similarity search is to be conducted on the graph representation of the primary vectors based on the modified query vectors.

Example C10 includes the at least one computer readable storage medium of any of Examples C1-C9, wherein the instructions, when executed, further cause the computing system to perform a machine learning operation using the one or more candidates for the query to generate a query result.

Example S1 includes a performance-enhanced computing system comprising a database to store a set of input vectors, a processor, and a memory coupled to the processor, the memory including a plurality of executable program instructions which, when executed by the processor, cause the processor to access a set of input vectors and a query vector, the set of input vectors each having a dimensionality associated with the set, the query vector associated with a query and having a dimensionality, apply a first vector transformation to the input vectors to generate primary vectors, each of the primary vectors having a dimensionality smaller than the dimensionality associated with the set of the input vectors, apply a second vector transformation to the query vector to generate a modified query vector, the modified query vector having a dimensionality smaller than the dimensionality of the query vector, and conduct a similarity search on the primary vectors based on the modified query vector to generate one or more candidates for the query.

Example S2 includes the computing system of Example S1, wherein a first component of the first vector transformation is to be determined based on an algorithm and a second component of the second vector transformation is to be determined based on the same algorithm.

Example S3 includes the computing system of Example S1 or S2, wherein the first component of the first vector transformation comprises a first orthonormal projection matrix, wherein the second component of the second vector transformation comprises a second orthonormal projection matrix, and wherein the first orthonormal projection matrix and the second orthonormal projection matrix are each based on an expected statistical distribution of query vectors and an expected statistical distribution of the input vectors.

Example S4 includes the computing system of any of Examples S 1-S3, wherein the algorithm comprises one or more of a Frank-Wolfe procedure, an eigenvector search or a closed-form singular value decomposition.

Example S5 includes the computing system of any of Examples S 1-S3, wherein the algorithm comprises a closed-form singular value decomposition, and wherein the dimensionality of the modified query vector is a tunable search hyperparameter selected at the time of access to the query vector.

Example S6 includes the computing system of any of Examples S 1-S5, wherein the instructions, when executed, further cause the processor to quantize each of the primary vectors prior to the similarity search, and wherein the similarity search is to be conducted on the primary vectors as quantized.

Example S7 includes the computing system of any of Examples S 1-S6, wherein the primary vectors are quantized based on a locally-adaptive vector quantization (LVQ) procedure.

Example S8 includes the computing system of any of Examples S1-S7, wherein the instructions, when executed, further cause the processor to rank the one or more candidates for the query based on one of the set of input vectors or a set of quantized input vectors, and output one or more of the one or more candidates for the query based on the ranking.

Example S9 includes the computing system of any of Examples S 1-S8, wherein the instructions, when executed, further cause the processor to generate a graph representation of the primary vectors, wherein the similarity search is to be conducted on the graph representation of the primary vectors based on the modified query vectors.

Example S10 includes the computing system of any of Examples S1-S9, wherein the instructions, when executed, further cause the processor to perform a machine learning operation using the one or more candidates for the query to generate a query result.

Example A1 includes a semiconductor apparatus comprising one or more substrates, and logic coupled to the one or more substrates, wherein the logic is implemented at least partly in one or more of configurable or fixed-functionality hardware, the logic to access a set of input vectors and a query vector, the set of input vectors each having a dimensionality associated with the set, the query vector associated with a query and having a dimensionality, apply a first vector transformation to the input vectors to generate primary vectors, each of the primary vectors having a dimensionality smaller than the dimensionality associated with the set of the input vectors, apply a second vector transformation to the query vector to generate a modified query vector, the modified query vector having a dimensionality smaller than the dimensionality of the query vector, and conduct a similarity search on the primary vectors based on the modified query vector to generate one or more candidates for the query.

Example A2 includes the semiconductor apparatus of Example A1, wherein a first component of the first vector transformation is to be determined based on an algorithm and a second component of the second vector transformation is to be determined based on the same algorithm.

Example A3 includes the semiconductor apparatus of Example A1 or A2, wherein the first component of the first vector transformation comprises a first orthonormal projection matrix, wherein the second component of the second vector transformation comprises a second orthonormal projection matrix, and wherein the first orthonormal projection matrix and the second orthonormal projection matrix are each based on an expected statistical distribution of query vectors and an expected statistical distribution of the input vectors.

Example A4 includes the semiconductor apparatus of any of Examples A1-A3, wherein the algorithm comprises one or more of a Frank-Wolfe procedure, an eigenvector search or a closed-form singular value decomposition.

Example A5 includes the semiconductor apparatus of any of Examples A1-A3, wherein the algorithm comprises a closed-form singular value decomposition, and wherein the dimensionality of the modified query vector is a tunable search hyperparameter selected at the time of access to the query vector.

Example A6 includes the semiconductor apparatus of any of Examples A1-A5, wherein the logic is to quantize each of the primary vectors prior to the similarity search, and wherein the similarity search is to be conducted on the primary vectors as quantized.

Example A7 includes the semiconductor apparatus of any of Examples A1-A6, wherein the primary vectors are quantized based on a locally-adaptive vector quantization (LVQ) procedure.

Example A8 includes the semiconductor apparatus of any of Examples A1-A7, wherein the logic is to rank the one or more candidates for the query based on one of the set of input vectors or a set of quantized input vectors, and output one or more of the one or more candidates for the query based on the ranking.

Example A9 includes the semiconductor apparatus of any of Examples A1-A8, wherein the logic is to generate a graph representation of the primary vectors, wherein the similarity search is to be conducted on the graph representation of the primary vectors based on the modified query vectors.

Example A10 includes the semiconductor apparatus of any of Examples A1-A9, wherein the logic is to perform a machine learning operation using the one or more candidates for the query to generate a query result.

Example A11 includes the semiconductor apparatus of any of Examples A1-A10, wherein the logic coupled to the one or more substrates includes transistor regions that are positioned within the one or more substrates.

Example M1 includes a method comprising accessing a set of input vectors and a query vector, the set of input vectors each having a dimensionality associated with the set, the query vector associated with a query and having a dimensionality, applying a first vector transformation to the input vectors to generate primary vectors, each of the primary vectors having a dimensionality smaller than the dimensionality associated with the set of the input vectors, applying a second vector transformation to the query vector to generate a modified query vector, the modified query vector having a dimensionality smaller than the dimensionality of the query vector, and conducting a similarity search on the primary vectors based on the modified query vector to generate one or more candidates for the query.

Example M2 includes the method of Example M1, wherein a first component of the first vector transformation is determined based on an algorithm and a second component of the second vector transformation is determined based on the same algorithm.

Example M3 includes the method of Example M1 or M2, wherein the first component of the first vector transformation comprises a first orthonormal projection matrix, wherein the second component of the second vector transformation comprises a second orthonormal projection matrix, and wherein the first orthonormal projection matrix and the second orthonormal projection matrix are each based on an expected statistical distribution of query vectors and an expected statistical distribution of the input vectors.

Example M4 includes the method of any of Examples M1-M3, wherein the algorithm comprises one or more of a Frank-Wolfe procedure, an eigenvector search or a closed-form singular value decomposition.

Example M5 includes the method of any of Examples M1-M3, wherein the algorithm comprises a closed-form singular value decomposition, and wherein the dimensionality of the modified query vector is a tunable search hyperparameter selected at the time of access to the query vector.

Example M6 includes the method of any of Examples M1-M5, further comprising quantizing each of the primary vectors prior to the similarity search, wherein the similarity search is conducted on the primary vectors as quantized.

Example M7 includes the method of any of Examples M1-M6, wherein the primary vectors are quantized based on a locally-adaptive vector quantization (LVQ) procedure.

Example M8 includes the method of any of Examples M1-M7, further comprising ranking the one or more candidates for the query based on one of the set of input vectors or a set of quantized input vectors, and outputting one or more of the one or more candidates for the query based on the ranking.

Example M9 includes the method of any of Examples M1-M8, further comprising generating a graph representation of the primary vectors, wherein the similarity search is conducted on the graph representation of the primary vectors based on the modified query vectors.

Example M10 includes the method of any of Examples M1-M9, further comprising performing a machine learning operation using the one or more candidates for the query to generate a query result.

Example AM1 includes an apparatus comprising means for performing the method of any of Examples M1 to M10.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), solid state drive (SSD) / NAND drive controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections, including logical connections via intermediate components (e.g., device A may be coupled to device C via device B). In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

**Claims**

1. At least one computer readable storage medium comprising a plurality of executable program instructions which, when executed by a computing system, cause the computing system to:

   access a set of input vectors and a query vector, the set of input vectors each having a dimensionality associated with the set, the query vector associated with a query and having a dimensionality;
   apply a first vector transformation to the input vectors to generate primary vectors, each of the primary vectors having a dimensionality smaller than the dimensionality associated with the set of the input vectors;
   apply a second vector transformation to the query vector to generate a modified query vector, the modified query vector having a dimensionality smaller than the dimensionality of the query vector; and
   conduct a similarity search on the primary vectors based on the modified query vector to generate one or more candidates for the query.

2. The at least one computer readable storage medium of claim 1, wherein a first component of the first vector transformation is to be determined based on an algorithm and a second component of the second vector transformation is to be determined based on the algorithm.

3. The at least one computer readable storage medium of claim 2, wherein the first component of the first vector transformation comprises a first orthonormal projection matrix, wherein the second component of the second vector transformation comprises a second orthonormal projection matrix, and wherein the first orthonormal projection matrix and the second orthonormal projection matrix are each based on an expected statistical distribution of query vectors and an expected statistical distribution of the input vectors.

4. The at least one computer readable storage medium of any of claims 2-3, wherein the algorithm comprises one or more of a Frank-Wolfe procedure, an eigenvector search or a closed-form singular value decomposition.

5. The at least one computer readable storage medium of any of claims 2-3, wherein the algorithm comprises a closed-form singular value decomposition, and wherein the dimensionality of the modified query vector is a tunable search hyperparameter selected at the time of access to the query vector.

6. The at least one computer readable storage medium of any of claims 1-2, wherein the instructions, when executed, further cause the computing system to quantize each of the primary vectors prior to the similarity search, and wherein the similarity search is to be conducted on the primary vectors as quantized.

7. The at least one computer readable storage medium of claim 6, wherein the primary vectors are quantized based on a locally-adaptive vector quantization (LVQ) procedure.

8. The at least one computer readable storage medium of any of claims 1-7, wherein the instructions, when executed, further cause the computing system to:

   rank the one or more candidates for the query based on one of the set of input vectors or a set of quantized input vectors; and
   output one or more of the one or more candidates for the query based on the ranking.

9. The at least one computer readable storage medium of any of claims 1-5, wherein the instructions, when executed, further cause the computing system to generate a graph representation of the primary vectors, wherein the similarity search is to be conducted on the graph representation of the primary vectors based on the modified query vectors.

10. The at least one computer readable storage medium of any of claims 1-9, wherein the instructions, when executed, further cause the computing system to perform a machine learning operation using the one or more candidates for the query to generate a query result.

11. A computing system comprising:

   a database to store a set of input vectors;
   a processor; and
   a memory coupled to the processor, the memory including a plurality of executable program instructions which, when executed by the processor, cause the processor to:

      access a set of input vectors and a query vector, the set of input vectors each having a dimensionality associated with the set, the query vector associated with a query and having a dimensionality;
      apply a first vector transformation to the input vectors to generate primary vectors, each of the primary vectors having a dimensionality smaller than the dimensionality associated with the set of the input vectors;
      apply a second vector transformation to the query vector to generate a modified query vector, the modified query vector having a dimensionality smaller than the dimensionality of the query vector; and
      conduct a similarity search on the primary vectors based on the modified query vector to generate one or more candidates for the query.

12. The computing system of claim 11, wherein:

   the first vector transformation comprises a first orthonormal projection matrix which is to be determined based on an algorithm;
   the second vector transformation comprises a second orthonormal projection matrix which is to be determined based on the algorithm;
the first orthonormal projection matrix and the second orthonormal projection matrix are each based on an expected statistical distribution of query vectors and an expected statistical distribution of the input vectors; and
the algorithm comprises one or more of a Frank-Wolfe procedure, an eigenvector search or a closed-form singular value decomposition.

13. The computing system of any of claims 11-12, wherein the instructions, when executed, further cause the processor to quantize each of the primary vectors prior to the similarity search, and wherein the similarity search is to be conducted on the primary vectors as quantized.

14. The computing system of any of claims 11-13, wherein the instructions, when executed, further cause the processor to:

rank the one or more candidates for the query based on one of the set of input vectors or a set of quantized input vectors; and
output one or more of the one or more candidates for the query based on the ranking.

15. The computing system of any of claims 11-14, wherein the instructions, when executed, further cause the processor to perform a machine learning operation using the one or more candidates for the query to generate a query result.

**FIG. 1**

**FIG. 2A**

**FIG. 2B**

Legend:
- ------ Construction
- —— Search

EP 4 645 110 A1

**FIG. 2C**

Query Vector 220

q' = Aq

Dimension Reduction 222

Mod. Query Vector 224

Similarity Search 226

Prelim. Ranked Candidates 266

Input Database Vectors 210

Dimension Reduction 212

$x_i' = Bx_i$

Primary Vectors 214

Primary Vector Index 216

Re-Ranking 268

Ranked Candidates 270

- - - - - - Construction
———— Search

**FIG. 2D**

---

1 Let $\mathbf{A}^{(0)}, \mathbf{B}^{(0)} \in \mathcal{C}$, e.g., $\mathbf{A}^{(0)} \leftarrow \mathbf{0}$ and $\mathbf{B}^{(0)} \leftarrow \mathbf{0}$;

2 **for** $t = 0, \ldots, T$ **do**

3 $\quad \gamma \leftarrow 1/(t+1)^{\alpha}$;

4 $\quad \mathbf{S}_{\mathbf{A}}^{(t)} \leftarrow \underset{\mathbf{S} \in \mathcal{C}}{\mathrm{argmax}} \langle \mathbf{S}, -\frac{\partial}{\partial \mathbf{A}} f(\mathbf{A}^{(t)}, \mathbf{B}^{(t)}) \rangle$; $\triangleright$ Eq. (13)

5 $\quad \mathbf{A}^{(t+1)} \leftarrow (1-\gamma)\mathbf{A}^{(t)} + \gamma \mathbf{S}_{\mathbf{A}}^{(t)}$;

6 $\quad \mathbf{S}_{\mathbf{B}}^{(t)} \leftarrow \underset{\mathbf{S} \in \mathcal{C}}{\mathrm{argmax}} \langle \mathbf{S}, -\frac{\partial}{\partial \mathbf{B}} f(\mathbf{A}^{(t+1)}, \mathbf{B}^{(t)}) \rangle$; $\triangleright$ Eq. (13)

7 $\quad \mathbf{B}^{(t+1)} \leftarrow (1-\gamma)\mathbf{B}^{(t)} + \gamma \mathbf{S}_{\mathbf{B}}^{(t)}$;

---

$$\mathbf{A} = \mathbf{A}^{(T+1)}$$
$$\mathbf{B} = \mathbf{B}^{(T+1)}$$

310

# FIG. 3

400

---

1 Find $\beta \in [0, 1]$ that minimizes Problem **(16)** with $\mathbf{P} \leftarrow \mathtt{projection}(\beta)$;

2 **Procedure** $\mathtt{projection}(\beta)$

3 $\quad$ **return** the matrix $\mathbf{P} \in \mathrm{St}(D, d)$ formed by the $d$ eigenvectors of $\mathbf{K}_{\beta} = \frac{1-\beta}{m}\mathbf{K}_{\mathbf{Q}} + \frac{\beta}{n}\mathbf{K}_{\mathbf{X}}$ with the largest eigenvalues, where $\mathbf{K}_{\mathbf{Q}} = \mathbf{Q}\mathbf{Q}^{\top}$ and $\mathbf{K}_{\mathbf{X}} = \mathbf{X}\mathbf{X}^{\top}$;

---

$$\mathbf{A} = \mathbf{B} = \mathbf{P}$$

410

# FIG. 4

<u>500</u>

**Input:** $D$-dimensional learning database vectors $X_{\text{learn}}$ and
learning query vectors $Q_{\text{learn}}$, the target
dimensionality $d \in [1, D]$.

**Output:** projection matrices **A** and **B**.

Form **Q** and **X** by horizontally stacking the vectors in $Q_{\text{learn}}$
and in $X_{\text{learn}}$, respectively.

Compute the SVD $\mathbf{USV}^{\mathsf{T}}$ of **Q**;

$\mathbf{W} \leftarrow \mathbf{USU}^{\mathsf{T}}$;

Form **P** with the $d$ left singular vectors of **WX**
corresponding to its largest singular values;

$\mathbf{A} \leftarrow \mathbf{PW}^{-1}$;

$\mathbf{B} \leftarrow \mathbf{PW}$;

510

$$\mathbf{A} = \mathbf{PW}^{-1}$$
$$\mathbf{B} = \mathbf{PW}$$

**FIG. 5**

<u>600A</u>

610 Access a set of input vectors and a query vector, the set of input vectors each having a dimensionality associated with the set, the query vector associated with a query and having a dimensionality

620a Apply a first vector transformation to the input vectors to generate primary vectors

620b Each of the primary vectors having a dimensionality smaller than the dimensionality associated with the set of the input vectors

630a Apply a second vector transformation to the query vector to generate a modified query vector

630b The modified query vector having a dimensionality smaller than the dimensionality of the query vector

640 Conduct a similarity search on the primary vectors based on the modified query vector to generate one or more candidates for the query

to Process 600B

# FIG. 6A

<u>600B</u>

from Process 600A

650a — Quantize each of the primary vectors prior to the similarity search

650b — The similarity search is conducted on the primary vectors as quantized

660 — Rank the one or more candidates for the query based on one of the set of input vectors or a set of quantized input vectors

665 — Output one or more of the one or more candidates for the query based on the ranking

670a — Generate a graph representation of the primary vectors

670b — The similarity search is conducted on the graph representation of the primary vectors based on the modified query vectors

680 — Perform a machine learning operation using the one or more candidates for the query to generate a query result

# FIG. 6B

**FIG. 7**

30

| Logic 34 |
|---|
| Substrate(s) 32 |

# FIG. 8

| Code 42 |
|---|

Memory 41

Front End

| Decoder(s) 44 |
|---|

| Register Renaming 46 | Scheduling 48 |

43

Execution Logic

| EU-1 | | EU-2 | • • • | | EU-N |

55-1    55-2                    55-N    50

Back End

| Retirement Logic 59 |

58

Processor Core 40

# FIG. 9

FIG. 10

**Processing Element 70**

99a — Proc. Core — 74b / 74a

MC — 72

76 — P-P

78 — P-P

**Processing Element 80**

99b — Proc. Core — 84b / 84a

MC — 82

88 — P-P

86 — P-P

71

Memory 62

Memory 63

Battery 61

94 — P-P

**IO Subsystem 90**

98 — P-P

High-Perf. Graphics 64

73 — I/F — 92

I/F — 96

65

Bus Bridge 66

IO Devices 65a

Audio IO 67c

67

Keyboard/Mouse 67a

Comm. Devices 67b

69

Data Storage 68 — Code

EP 4 645 110 A1

Europäisches
Patentamt

European
Patent Office

Office européen
des brevets

## EUROPEAN SEARCH REPORT

Application Number

EP 25 16 7808

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARIANO TEPPER ET AL: "LeanVec: Searching vectors faster by making them fit", ARXIV.ORG, CORNELL UNIVERSITY LIBRARY, 201 OLIN LIBRARY CORNELL UNIVERSITY ITHACA, NY 14853, 3 April 2024 (2024-04-03), XP091717427, * figures 1,2,3 * * pages 1-3 * * pages 8,12,20 * ----- | 1-15 | INV. G06F16/334 G06N20/00 |

**TECHNICAL FIELDS SEARCHED (IPC)**

G06F
G06N

The present search report has been drawn up for all claims

| Place of search | Date of completion of the search | Examiner |
|---|---|---|
| Munich | 21 July 2025 | Michalski, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................................

& : member of the same patent family, corresponding
document

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63642298

**Non-patent literature cited in the description**

- **C. AGUERREBERE**. Similarity Search in the Blink of an Eye with Compressed Indices. *Proceedings of the VLDB Endowment*, 2023, vol. 16 (11), 3433-3446